# EUROPÄISCHE PATENTANMELDUNG

(11) **EP 4 484 123 A1**
(43) Veröffentlichungstag der Anmeldung: **01.01.2025**
(21) Anmeldenummer: 23182257.8
(22) Anmeldetag: 29.06.2023
(51) Int. Cl.: B29C 64/153, B22F 10/16, B22F 10/64, B29C 64/295, B29C 64/30, B29C 71/02, B33Y 10/00, B33Y 40/00, B33Y 70/10, C04B 35/00

(54) **VERFAHREN ZUR HERSTELLUNG EINES DREIDIMENSIONALEN OBJEKTS**

(71) Anmelder: TIGER Coatings GmbH & Co. KG, 4600 Wels (AT); Fraunhofer-Gesellschaft zur Förderung der angewandten Forschung e.V., 80686 München (DE)
(72) Erfinder: SEIRINGER, Sarah, 4600 Wels (AT); SCHIMO-AICHHORN, Gabriela, 4600 Wels (AT); SCHEITHAUER, Uwe, 01277 Dresden (DE); BERGER, Christian, 01277 Dresden (DE)
(74) Vertreter: SONN Patentanwälte GmbH & Co KG

(57) **Zusammenfassung**

Die Erfindung betrifft ein Verfahren zur Herstellung eines dreidimensionalen Objekts unter Verwendung von additiver Fertigung, insbesondere selektivem Lasersintern (L-PBF), umfassend die Schritte: (a) Bereitstellen eines bei 25 °C festen Ausgangsmaterials umfassend eine wärmehärtbare Harzzusammensetzung und einen Sinterwerkstoff, (b) Additive Fertigung des dreidimensionalen Objekts, (c) zumindest teilweise Wärmehärtung der Harzzusammensetzung im dreidimensionalen Objekt, (d) Zersetzung der Harzzusammensetzung im dreidimensionalen Objekt, und (e) Wärmebehandlung des dreidimensionalen Objekts. Die Erfindung betrifft weiters die Verwendung eines bei 25 °C festen Ausgangsmaterials in der additiven Fertigung, insbesondere im selektiven Lasersintern (L-PBF), zur Herstellung eines dreidimensionalen Objekts, wobei das Ausgangsmaterial eine wärmehärtbare Harzzusammensetzung und einen Sinterwerkstoff umfasst, dadurch gekennzeichnet, dass das Ausgangsmaterial den Sinterwerkstoff in einer Menge von 20 Vol% oder mehr umfasst, bezogen auf das Gesamtvolumen des Ausgangsmaterials.

## Beschreibung

Die vorliegende Erfindung betrifft ein Verfahren zur Herstellung eines dreidimensionalen Objekts unter Verwendung von additiver Fertigung, insbesondere selektivem Lasersintern (L-PBF).

Die Erfindung betrifft weiters die Verwendung eines bei 25 °C festen Ausgangsmaterials in der additiven Fertigung, insbesondere im selektiven Lasersintern (L-PBF), zur Herstellung eines dreidimensionalen Objekts, wobei das Ausgangsmaterial eine wärmehärtbare Harzzusammensetzung und einen Sinterwerkstoff umfasst.

Verfahren zur Herstellung dreidimensionaler Objekte mittels additiver Fertigung sind im Stand der Technik bekannt. Ein Verfahren zur Herstellung dreidimensionaler Kunststoffobjekte wird beispielsweise in der DE 10 2019 212 298 A1 beschrieben, wobei ein Pulvergemisch für selektives Lasersintern verwendet wird. Das Pulvergemisch umfasst ein erstes Pulver mit Pulverteilchen, die ein erstes thermoplastisches Polymermaterial und einen Verstärkungsstoff enthalten, und ein zweites Pulver mit Pulverteilchen, die ein zweites thermoplastisches Polymermaterial enthalten. Der Verstärkungsstoff kann Kohlefasern, Glasfasern, Carbon-Nanotubes, Glaskugeln oder ein Flammschutzmittel umfassen, wobei das Flammschutzmittel Metalloxide, Metallhydroxide, Metallsalze, Bor- und Zinkverbindungen, Siliciumverbindungen, Graphit oder stickstoffbasierte Flammschutzmittel auf Melaminbasis umfassen kann.

Auch Verfahren zur Herstellung dreidimensionaler keramischer Objekte sind im Stand der Technik bekannt, beispielsweise aus der WO 2018/005350 A1, wo die Herstellung mittels eines Fused Filament Fabrication (FFF-) Verfahrens erfolgt. Dabei wird eine bei Raumtemperatur fließfähige Mischung bestehend aus einem organischen reaktiven Material (z.B. Präpolymere von Polyurethanen, Polyestern, Epoxiden, Silikonen) und anorganischen Partikeln verwendet. Die anorganischen Partikeln können ein Metall oder eine Keramik umfassen, etwa ein Oxid, Nitrid oder Carbid. Die Menge an anorganischen Partikeln in der Mischung kann im Bereich von 10 bis 80 Gew% liegen, bezogen auf das Gesamtgewicht der Mischung. Die Mischung wird bei Raumtemperatur schichtweise in Form von Filamenten gelegt oder direkt extrudiert, um ein dreidimensionales Objekt herzustellen. Danach wird das organische reaktive Material bei Raumtemperatur oder einer erhöhten Temperatur gehärtet, um ein Duromer zu erhalten. Anschließend wird das dreidimensionale Objekt auf eine Temperatur von 400 °C oder mehr erhitzt, um das Duromer zu zersetzen, sodass dieses eine Kohlenstoffphase zur Bindung der anorganischen Partikel bildet. Das resultierende dreidimensionale Objekt weist eine hohe Porosität von zumindest 35% auf.

Weiters werden auch photolithographische Verfahren zur Herstellung dreidimensionaler, keramischer Objekte verwendet, beispielsweise Lithography-based Ceramic Manufacturing (LCM-) Verfahren. Dabei wird eine flüssige Mischung umfassend ein Photopolymer und einen keramischen Rohstoff schichtweise gedruckt. Nach dem Auftragen jeder Schicht wird das darin enthaltene Photopolymer durch Bestrahlung mit Licht polymerisiert. Nach der additiven Fertigung wird das dreidimensionale Objekt erhitzt, um den Binder zu entfernen, und die keramischen Partikel werden anschließend durch Sintern verdichtet. Zwar können sich mittels LCM-Verfahren keramische Objekte mit einer vergleichsweise hohen Auflösung fertigen lassen. Dabei ist jedoch darauf zu achten, dass das Licht durch den keramischen Rohstoff nicht gestreut oder absorbiert wird, da hierdurch die Druckbarkeit und die Auflösung verschlechtert werden können. Auch weisen LCM-Verfahren eine geringe Produktivität auf und sind kostenintensiv.

Ein weiteres etabliertes Verfahren zur Herstellung dreidimensionaler Objekte ist das Binder-Jetting (BJT). Bei diesem Verfahren wird pulverförmiges Ausgangsmaterial schichtweise aufgetragen und zwischen jedem Auftragungsvorgang mit einem organischen Binder selektiv verklebt. Die erhaltenen Objekte in Form von verklebten Pulvern weisen eine hohe Porosität von meist über 50 Vol% und eine nur geringe Druckfestigkeit auf.

Die Qualität von dreidimensionalen, keramischen Objekten, die mittels additiver Fertigung hergestellt wurden, lässt sich durch eine Nachbearbeitung (z.B. Schleifen) kaum verbessern, da eine solche aufgrund der Härte und Sprödigkeit des keramischen Objekts aufwändig und schwierig ist und damit ein hoher Werkzeugverschleiß und eine Bruchgefahr des keramischen Objekts einhergehen. Auch können manche Oberflächen geometrisch komplexer Objekte aufgrund deren Unzugänglichkeit oftmals gar nicht nachbearbeitet werden, bzw. lediglich durch ein aufwändiges Strömungsschleifen. Es besteht daher ein Bedarf an einem Verfahren, mit welchem dreidimensionale, insbesondere keramische, Objekte auch mit feinen, komplexen Strukturen in unterschiedlichen Größen und mit einer hohen Produktivität hergestellt werden können, ohne dass eine Nachbearbeitung erforderlich ist. Es ist eine Aufgabe dieser Erfindung, ein solches Verfahren zur Verfügung zu stellen.

Die Erfindung betrifft ein Verfahren zur Herstellung eines dreidimensionalen Objekts unter Verwendung von additiver Fertigung, insbesondere selektivem Lasersintern (L-PBF), umfassend die Schritte:
(a) Bereitstellen eines bei 25 °C festen Ausgangsmaterials umfassend eine wärmehärtbare Harzzusammensetzung und einen Sinterwerkstoff,
(b) Additive Fertigung des dreidimensionalen Objekts,
(c) zumindest teilweise Wärmehärtung der Harzzusammensetzung im dreidimensionalen Objekt,
(d) Zersetzung der Harzzusammensetzung im dreidimensionalen Objekt, und
(e) Wärmebehandlung des dreidimensionalen Objekts.

Mit dem Verfahren ist überraschenderweise die Herstellung dreidimensionaler, insbesondere keramischer, Objekte in unterschiedlichsten Größen möglich, wobei eine kurze Fertigungszeit mit einer guten Präzision und einer hohen Stabilität der Objekte, auch nach der Zersetzung der Harzzusammensetzung, kombiniert werden kann.

Das Ausgangsmaterial kann beispielsweise ein Pulver, ein Granulat und/oder Filamente umfassen. Die Form des Ausgangsmaterials kann somit gut an das jeweilige additive Fertigungsverfahren angepasst werden. Die Erfindung ist nicht auf Ausgangsmaterialien in Form von Pulver, Granulat und/oder Filamente beschränkt. Bevorzugt ist es, wenn das Ausgangsmaterial in Pulverform ist. Das macht es insbesondere für das selektive Lasersintern (Laser Power Bed Fusion, L-PBF) geeignet.

Das Ausgangsmaterial weist vorzugsweise eine d₅₀-Partikelgröße von 10 bis 100 µm auf, bevorzugter von 20 bis 60 µm, noch bevorzugter von 25 bis 50 µm, insbesondere von 30 bis 40 µm. Daraus kann bei der additiven Fertigung, insbesondere bei Pulverbettverfahren wie dem L-PBF, ein gleichmäßiger Schichtaufbau resultieren, und ein dreidimensionales Objekt mit einer glatten Oberfläche kann erhalten werden. Die in dieser Beschreibung angegebenen d₅₀-Partikelgrößen können gemäß der Norm ISO 8130-13:2019 bestimmt werden. Für Mikro-SLS oder Mikro-L-PBF Verfahren weist das Ausgangsmaterial bevorzugt eine vergleichsweise geringe d₅₀-Partikelgröße von 2 bis 10 µm auf, bevorzugter von 4 bis 8 µm. Für Vat-Photo-Polymerisation-Verfahren weist das Ausgangsmaterial vorzugsweise eine d₅₀-Partikelgröße von 0,01 bis 2,00 µm auf, bevorzugter von 0,05 bis 1,00 µm. Für das Binder-Jetting-Verfahren liegt die d₅₀-Partikelgröße des Ausgangsmaterials vorzugsweise im Bereich von 5 bis 100 µm, bevorzugter von 15 bis 40 µm.

Vorzugsweise ist das Ausgangsmaterial bei 30 °C fest, bevorzugter bei 40 °C, noch bevorzugter bei 50 °C. Die Kettenbeweglichkeit von Molekülen im Ausgangsmaterial ist bei dessen Lagerung im festen Zustand vergleichsweise gering. Folglich kann das Risiko einer Initiierung einer Härtungsreaktion im Ausgangsmaterial vor der additiven Fertigung, insbesondere während der Lagerung des Ausgangsmaterials, erheblich reduziert werden, und die Lagerstabilität des Ausgangsmaterials kann somit erhöht werden. Ebenso kann die Handhabung eines festen Ausgangsmaterials verglichen mit flüssigen Ausgangsmaterialien einfacher und sicherer sein.

Bevorzugt umhüllt die wärmehärtbare Harzzusammensetzung den Sinterwerkstoff zumindest teilweise. Dadurch kann die Homogenität des dreidimensionalen Objekts verbessert werden, weil die wärmehärtbare Harzzusammensetzung und der Sinterwerkstoff im dreidimensionalen Objekt dann besonders gleichmäßig verteilt sein können. Folglich kann die Form des dreidimensionalen Objekts auch nach der Zersetzung der Harzzusammensetzung sehr gut erhalten bleiben. Ebenso kann dadurch eine Entmischung der wärmehärtbaren Harzzusammensetzung vom Sinterwerkstoff reduziert oder sogar gänzlich vermieden werden, wodurch sowohl die Druckbarkeit des Ausgangsmaterials sowie die Recyclierbarkeit von überschüssigem Ausgangsmaterial, z.B. aus einem Pulverbett oder einem Overflow-Behälter des 3D-Druckers, verbessert werden können. Um ein Ausgangsmaterial bereitzustellen, in welchem die wärmehärtbare Harzzusammensetzung den Sinterwerkstoff zumindest teilweise umhüllt, werden die wärmehärtbare Harzzusammensetzung und der Sinterwerkstoff vorzugsweise coextrudiert. Alternativ kann auch ein anderes Schmelz-Misch-Verfahren eingesetzt werden, beispielsweise unter Verwendung eines beheizbaren Rührreaktors. Auch die Verwendung eines Sprühtrocknungsprozesses ist möglich.

Das bereitgestellte Ausgangsmaterial umfasst eine wärmehärtbare Harzzusammensetzung. Die Harzzusammensetzung umfasst ein wärmehärtbares Harz, das unter Zufuhr von thermischer Energie mit einem in der Harzzusammensetzung enthaltenen Härter reagieren und/oder selbsthärtend sein kann. Vorzugsweise ist das Harz nicht selbsthärtend, sodass die Harzzusammensetzung zusätzlich zum Harz auch einen Härter umfasst. Die Verwendung einer wärmehärtbaren Harzzusammensetzung anstelle eines thermoplastischen, nicht härtbaren Polymers, wie aus dem Stand der Technik bekannt, ist vorteilhaft, da aufgrund der höheren Steifigkeit und der höheren Temperaturbeständigkeit eines Duromers, welches sich bei der erfindungsgemäßen, zumindest teilweisen Wärmehärtung der Harzzusammensetzung ausbildet, auch bei einer höheren Temperatur eine vergleichsweise gute Formstabilität des dreidimensionalen Objekts bereitgestellt werden kann. Dies ist besonders beim Schritt der Zersetzung der Harzzusammensetzung vorteilhaft, da die Dimensionsstabilität des Objekts so verbessert werden kann.

Das Ausgangsmaterial umfasst die Harzzusammensetzung vorzugsweise in einer Menge von 10 bis 60 Gew%, bevorzugter von 20 bis 50 Gew%, noch bevorzugter von 20 bis 45 Gew%, besonders bevorzugt von 25 bis 45 Gew%, bezogen auf das Gesamtgewicht des Ausgangsmaterials, beispielsweise 15, 25, 30, 35 oder 40 Gew%. Die Harzzusammensetzung kann das dreidimensionale Objekt dann gut stabilisieren, insbesondere nach ihrer zumindest teilweisen Wärmehärtung. Ebenso kann dann eine gute Druckbarkeit des Ausgangsmaterials gegeben sein.

Die wärmehärtbare Harzzusammensetzung hat vorzugsweise eine Härtungstemperatur von 80 °C oder mehr, bevorzugter im Bereich von 100 bis 250 °C, noch bevorzugter von 150 bis 250 °C und besonders bevorzugt von 160 bis 220 °C. Dann kann ein unabsichtliches Härten der Harzzusammensetzung verhindert werden, z.B. bei Herstellung, Lagerung oder Transport der Harzzusammensetzung, bzw. bei der additiven Fertigung, insbesondere wenn diese ohne eine teilweise Wärmehärtung der Harzzusammensetzung erfolgt. Gleichzeitig kann eine zumindest teilweise Wärmehärtung der Harzzusammensetzung rasch erfolgen, sobald die Harzzusammensetzung auf eine Temperatur erwärmt wird, welche der Härtungstemperatur entspricht oder darüber liegt.

Bevorzugt umfasst die wärmehärtbare Harzzusammensetzung ein Epoxidharz und/oder ein Polyesterharz. Durch das Polyesterharz können die Verarbeitungseigenschaften des Ausgangsmaterials verbessert werden, während das Epoxidharz dem dreidimensionalen Objekt bereits vor der zumindest teilweisen Wärmehärtung eine gute Stabilität verleihen kann.

Das Gewichtsverhältnis von Polyesterharz zu Epoxidharz liegt vorzugsweise im Bereich von 2,0:1,0 bis 1,0:4,0 (Polyester:Epoxidharz), bevorzugter von 1,0:1,0 bis 1,0:2,0, noch bevorzugter von 1,0:1,0 bis 1,0:1,7, und besonders bevorzugt von 1,0:1,1 bis 1,0:1,4. Dadurch kann eine gute Balance zwischen Verarbeitungseigenschaften und mechanischen Eigenschaften des dreidimensionalen Objekts vor und bei der Zersetzung der Harzzusammensetzung erreicht werden.

Die durchschnittliche Funktionalität des Harzes, insbesondere des Epoxidharzes und/oder des Polyesterharzes, liegt vorzugsweise bei zwei oder mehr, bevorzugter im Bereich von zwei bis vier, insbesondere bevorzugt von zwei bis drei. Wenn die Harzzusammensetzung zwei oder mehr Harze umfasst, liegt die Funktionalität aller Harze vorzugsweise in dem genannten Bereich. Dann ist eine effiziente Härtung möglich und kann eine optimale Vernetzungsdichte erreicht werden.

Das Ausgangsmaterial umfasst das Polyesterharz vorzugsweise in einer Menge von 3 bis 30 Gew%, bevorzugter von 5 bis 30 Gew%, noch bevorzugter von 10 bis 25 Gew%, besonders bevorzugt von 8 bis 20 Gew%, bezogen auf das Gesamtgewicht des Ausgangsmaterials, beispielsweise 12, 14, 16 oder 18 Gew%. Daraus können gute Verarbeitungseigenschaften des Ausgangsmaterials, insbesondere bei der additiven Fertigung in Schritt (b), resultieren.

Das Polyesterharz, insbesondere ein amorphes Polyesterharz, weist vorzugsweise eine Glasübergangstemperatur im Bereich von 50 bis 100 °C auf, bevorzugter von 50 bis 80 °C. Wenn die additive Fertigung und/oder die zumindest teilweise Wärmehärtung der Harzzusammensetzung oberhalb der Glasübergangstemperatur des Polyesterharzes erfolgt/erfolgen, kann das Polyesterharz in Schritt (b) und/oder in Schritt (c) im entropieelastischen Zustand vorliegen, was seine Kettenbeweglichkeit erhöhen und dadurch die Verarbeitbarkeit des Ausgangsmaterials bzw. die Härtungsreaktion der Harzzusammensetzung erleichtern kann. Da das Polyesterharz im entropieelastischen Zustand klebrig sein kann, kann dadurch in Schritt (b) der Zusammenhalt der bei der additiven Fertigung gedruckten Schichten verbessert werden, selbst wenn dabei noch keine Wärmehärtung erfolgt. Die Glasübergangstemperatur der amorphen Domänen von teilkristallinen Polyesterharzen kann aber auch deutlich unter den in diesem Absatz genannten Bereichen liegen, beispielsweise unterhalb von 25 °C oder auch unterhalb von 0 °C; dies ist aber unproblematisch, da die Beweglichkeit von Polymerketten in amorphen Domänen durch die Rigidität der kristallinen Domänen unterhalb deren Schmelzbereichs, welcher üblicherweise bei 80 °C oder darüber liegt, bevorzugter bei 100 °C oder darüber, eingeschränkt ist.

Bevorzugt umfasst das Polyesterharz ein aliphatisches Polyesterharz. Dadurch kann die Kettenbeweglichkeit des Polyesterharzes erhöht werden, und dementsprechend auch die Fließfähigkeit des Ausgangsmaterials bei einer bestimmten Temperatur, wodurch die Verarbeitbarkeit des Ausgangsmaterials weiter verbessert werden kann.

Das Polyesterharz umfasst vorzugsweise ein carboxyliertes und/oder hydroxyliertes Polyesterharz. Das Polyesterharz kann dann über Carboxylgruppen und/oder Hydroxylgruppen unter Zufuhr von thermischer Energie härten. Dann kann zur Härtung des Epoxidharzes über die Epoxidgruppen und zur Härtung des Polyesterharzes über die Carboxylgruppen und/oder die Hydroxylgruppen derselbe Härter eingesetzt werden. Auch eine Reaktion zwischen dem Epoxidharz und dem Polyesterharz, kann dann erfolgen, insbesondere eine Reaktion zwischen den Epoxidgruppen des Epoxidharzes mit den Carboxylgruppen des Polyesterharzes, wodurch die Stabilität und die Homogenität des sich ausbildenden dreidimensionalen Netzwerks (d.h. des Duromers) weiter verbessert werden können.

Das carboxylierte Polyesterharz weist vorzugsweise eine Säurezahl im Bereich von 10 bis 100 mg KOH/g auf, vorzugsweise von 20 bis 90 mg KOH/g, bevorzugter von 20 bis 50 mg KOH/g, noch bevorzugter von 25 bis 40 mg KOH/g, beispielsweise, 30, 35, 40, 45, 50, 55, 60, 65, 70, 75, 80 oder 85 mg KOH/g. Das carboxylierte Polyesterharz kann auch eine Säurezahl im Bereich von 30 bis 90 mg KOH/g aufweisen, vorzugweise von 50 bis 90 mg KOH/g, bevorzugter von 60 bis 85 mg KOH/g. Das hydroxylierte Polyesterharz weist vorzugsweise eine Hydroxylzahl im Bereich von 10 bis 300 mg KOH/g auf, bevorzugter von 15 bis 200 mg KOH/g, noch bevorzugter von 20 bis 100 mg KOH/g, beispielsweise, 30, 40, 50, 60, 70, 80 oder 90 mg KOH/g. Ebenso kann ein carboxyl-/hydroxyl-bifunktionelles Polyesterharz eingesetzt werden, worunter ein Polyesterharz verstanden wird, dessen Säurezahl und Hydroxylzahl jeweils bei 10 mg KOH/g oder darüber liegen, vorzugsweise bei 15 mg KOH/g oder darüber. Daraus kann eine Vernetzungsdichte resultieren, durch welche ein optimales Verhältnis der mechanischen Eigenschaften der Harzzusammensetzung erhalten werden kann, insbesondere ein optimales Verhältnis zwischen Bruchdehnung und Bruchspannung.

Das Polyesterharz umfasst vorzugsweise ein teilkristallines Polyesterharz. Bei der Schmelztemperatur des teilkristallinen Polyesterharzes können kristalline Domänen schmelzen, wodurch die Viskosität des Ausgangsmaterials signifikant reduziert werden kann. Wenn die Verarbeitung, insbesondere die additive Fertigung, bei einer Temperatur nahe der Schmelztemperatur des teilkristallinen Polyesterharzes oder bei einer darüberliegenden Temperatur erfolgt, kann daher die Verarbeitbarkeit des Ausgangsmaterials deutlich verbessert werden. Vorzugsweise wird Schritt (b) bei einer Temperatur durchgeführt, die im Bereich von 50 °C unterhalb und 20 °C oberhalb der Schmelztemperatur liegt, bevorzugter im Bereich von 40 °C unterhalb und 10 °C oberhalb der Schmelztemperatur. Bei einem Pulverbettverfahren, beispielsweise dem L-PBF, ist unter der Temperatur bei der additiven Fertigung in Schritt (b) die Pulverbetttemperatur zu verstehen. Teilkristalline Polymere haben keinen scharfen Schmelzpeak, sondern einen Schmelzbereich, und kristalline Domänen können bereits unterhalb der Schmelztemperatur zu schmelzen beginnen. Die Viskosität kann daher auch bereits dann reduziert werden, wenn die additive Fertigung im genannten Temperaturbereich unterhalb der Schmelztemperatur des teilkristallinen Polyesterharzes erfolgt. Durch die Viskositätsreduktion und die damit einhergehende verbesserte Kettenbeweglichkeit kann weiters die Geschwindigkeit der Härtungsreaktion der Harzzusammensetzung bei der Wärmehärtung zunehmen, wodurch das dreidimensionale Objekt möglichst rasch durch das sich ausbildende dreidimensionale Netzwerk der Harzzusammensetzung stabilisiert werden kann, sodass eine gute Formstabilität gewährleistet werden kann. Vorzugsweise liegt bei einem Pulverbettverfahren die Temperatur bei der additiven Fertigung in Schritt (b) (i.e. die Pulverbetttemperatur) unterhalb des Schmelzbereichs des teilkristallinen Polyesterharzes, da dadurch die Recyclierbarkeit von überschüssigem Ausgangsmaterial sowie das Entpackungsverhalten des dreidimensionalen Objekts aus dem Pulverbett verbessert werden. Selbstverständlich kann bei einem L-PBF Verfahren aber durch die kurzzeitige Laser-Bestrahlung des Pulverbetts an jenen Stellen, welche einer Querschnittsfläche des dreidimensionalen Objekts der jeweiligen Schicht entsprechen, für kurze Zeit eine Temperatur deutlich über der Pulverbetttemperatur und somit auch über dem Schmelzbereich des teilkristallinen Polyesters vorliegen.

Die Schmelztemperatur des teilkristallinen Polyesterharzes liegt vorzugsweise im Bereich von 80 bis 150 °C, bevorzugter von 90 bis 130 °C, noch bevorzugt von 90 bis 120 °C, besonders bevorzugt von 105 bis 120 °C. Die additive Fertigung in Schritt (b) kann dann bei einer Temperatur durchgeführt werden, die oberhalb der Schmelztemperatur des teilkristallinen Polyesterharzes liegt, und zugleich unterhalb einer Härtungstemperatur des Ausgangsmaterials.

Vorzugsweise umfasst die Harzzusammensetzung ein teilkristallines Polyesterharz mit einer Schmelztemperatur im Bereich von 105 bis 120 °C und einer Viskosität bei 120 °C von 2,0 Pa s oder darunter. Dadurch können die Verarbeitbarkeit und die Härtungseigenschaften des Ausgangsmaterials signifikant verbessert werden.

Die Harzzusammensetzung kann ein teilkristallines Polyesterharz und ein amorphes Polyesterharz umfassen. Dadurch kann die mit dem Aufschmelzen kristalliner Domänen des teilkristallinen Polyesterharzes einhergehende Viskositätsreduktion kontrolliert werden. Das Verhältnis von teilkristallinem Polyesterharz zu amorphem Polyesterharz ist vorzugsweise im Bereich von 3,0:1,0 bis 1,0:3,0 (teilkristallin:amorph), bevorzugter von 2,0:1,0 bis 1,0:2,0, noch bevorzugter von 1,7:1,0 bis 1,0:1,0, besonders bevorzugt von 1,6:1,0 bis 1,3:1,0. Beispielsweise ist ein höherer Anteil des amorphen Polyesterharzes möglich, etwa ein Verhältnis von 1,0:1,7 (teilkristallin:amorph); 1,0:1,6; 1,0:1,5; 1,0:1,4; 1,0:1,3; 1,0:1,2: 1,0:1,1, aber auch ein höherer Anteil des teilkristallinen Polyesterharzes ist möglich, etwa ein Verhältnis von 1,8:1,0 (teilkristallin:amorph); 1,7:1,0; 1,6:1,0; 1.5:1,0; 1,4:1,0; 1,3:1,0; 1,2:1,0 oder 1,1:1,0. Dadurch kann eine für die Verarbeitung des Ausgangsmaterials in der additiven Fertigung in Schritt (b) vorteilhafte Viskositätsreduktion durch das Aufschmelzen der kristallinen Domänen eingestellt werden (vorausgesetzt, die Temperatur in Schritt (b) liegt nahe der Schmelztemperatur des teilkristallinen Polyesterharzes oder darüber, bzw. in einem L-PBF Verfahren wird an den bestrahlten Querschnittsflächen des dreidimensionalen Objekts eine solche Temperatur zumindest kurzzeitig erzeugt). Es kann auch vorteilhaft sein ausschließlich teilkristallines Polyesterharz einzusetzen, da dadurch eine besonders hohe Viskositätsreduktion erzielt werden kann. Dabei gilt es aber zu beachten, dass es durch diese starke Viskositätsreaktion auch zu Einbußen der Druckpräzision in Schritt (b) kommen kann, abhängig von der Geometrie des dreidimensionalen Objekts und den gewählten Prozessparametern. Tritt dieses Problem auf, so hat sich die Zugabe von einem zusätzlichen amorphen Polyesterharz häufig bewährt.

Die Glasübergangstemperatur des amorphen Polyesterharzes liegt vorzugsweise im Bereich von 35 bis 70 °C, bevorzugter von 45 bis 65 °C, noch bevorzugter von 50 bis 65 °C. Wenn die additive Fertigung und/oder die zumindest teilweise Wärmehärtung der Harzzusammensetzung oberhalb der Glasübergangstemperatur des amorphen Polyesterharzes erfolgt/erfolgen, kann das amorphe Polyesterharz im entropieelastischen Zustand vorliegen, was seine Kettenbeweglichkeit erhöht und dadurch die Verarbeitbarkeit des Ausgangsmaterials bzw. die Härtungsreaktion der Harzzusammensetzung erleichtern kann. Ebenso wirkt sich eine Glasübergangstemperatur in diesem Bereich vorteilhaft auf die Lager- und Transportstabilität des Ausgangsmaterial aus.

Mögliche kommerziell erhältliche Polyesterharze, die alleine oder in Kombination verwendet werden können, sind Uralac P5127 (Covestro, Deutschland; Tg von 57 °C, Säurezahl von 69-79 mg KOH/g, Viskosität bei 150 °C von 18-38 Pa s); Uralac P3250 (Covestro, Deutschland; Tg von 53 °C, Säurezahl von 70-85 mg KOH/g, Viskosität bei 160°C von 7-17 Pa s); Crylcoat 1510-0 (Allnex, Deutschland; Tg von 58°C, Säurezahl von 71 mg KOH/g, Viskosität bei 175 °C von 8,5 Pa s); Crylcoat 1573 (Allnex, Deutschland; Tg von 56°C, Säurezahl von 70 mg KOH/g, Viskosität bei 200 °C von 3,5 Pa s); Sirales PE8210 (SIR Industriale, Italien; Tg von 56 °C, Säurezahl von 68-78 mg KOH/g, Viskosität bei 200 °C von 1,2-4,0 Pa s); Sirales PE5900 (SIR Industriale, Italien; Tg unter 0 °C; Schmelzbereich von 105-120 °C, Säurezahl von 28-36 mg KOH/g, Viskosität bei 120 °C von 1,5 Pa s; teilkristallines, carboxyliertes Polyesterharz).

Das Ausgangsmaterial umfasst das Epoxidharz vorzugsweise in einer Menge von 5 bis 35 Gew%, bevorzugter von 10 bis 30 Gew%, noch bevorzugter von 15 bis 28 Gew% und besonders bevorzugt von 15 bis 25 Gew%, bezogen auf das Gesamtgewicht des Ausgangsmaterials, beispielsweise 18, 22, 24, oder 26 Gew%. Dann kann das dreidimensionale Objekt bereits unmittelbar nach seiner additiven Fertigung gute mechanische Eigenschaften aufweisen, insbesondere eine hohe Zug- und Druckfestigkeit. Auch kann eine aus der zumindest teilweisen Wärmehärtung der Harzzusammensetzung resultierende Schwindung durch die Zugabe des Epoxidharzes in der genannten Menge reduziert werden.

Das Epoxidharz weist vorzugsweise eine Glasübergangstemperatur im Bereich von 60 bis 150 °C auf, bevorzugter von 80 bis 120 °C. Wenn die additive Fertigung und/oder die zumindest teilweise Wärmehärtung der Harzzusammensetzung oberhalb der Glasübergangstemperatur des Epoxidharzes erfolgt/erfolgen, kann das Epoxidharz im entropieelastischen Zustand vorliegen, was seine Kettenbeweglichkeit erhöhen und dadurch die Verarbeitbarkeit des Ausgangsmaterials bzw. die Härtungsreaktion der Harzzusammensetzung erleichtern kann. Da das Epoxidharz im entropieelastischen Zustand klebrig sein kann, kann dann in Schritt (b) der Zusammenhalt der bei der additiven Fertigung gedruckten Schichten verbessert werden, selbst wenn dabei noch keine Wärmehärtung erfolgt. Ebenso wirkt sich eine Glasübergangstemperatur in diesem Bereich vorteilhaft auf die Lager- und Transportstabilität des Ausgangsmaterial aus. Wiederum kann beim L-PBF Verfahren die Temperatur von Schritt (b) (i.e. die Pulverbetttemperatur) auch unterhalb der Glasübergangstemperatur des Epoxidharzes gewählt werden und erst bei Bestrahlung durch den Laser und der damit einhergehenden kurzzeitigen Temperaturerhöhung an bestrahlen Querschnittsflächen des dreidimensionalen Objekts kann das Epoxidharz dann im entropieelastischen Zustand vorliegen, wodurch sich die beschriebenen Vorteile ergeben.

Das Epoxidharz weist bei 150 °C vorzugsweise eine Viskosität im Bereich von 0,1 bis 10 Pas auf, bevorzugter von 0,5 bis 10 Pas, noch bevorzugter von 1,0 bis 5,0 Pas. Das kann die Fließfähigkeit des Ausgangsmaterials verbessern, und folglich die Verarbeitbarkeit bei der additiven Fertigung.

Das Epoxid-Äquivalentgewicht (EEW) des Epoxidharzes liegt vorzugsweise bei 150 g/eq oder darüber, bevorzugter bei 350 g/eq oder darüber, noch bevorzugter im Bereich von 350 bis 1000 g/eq, besonders bevorzugt im Bereich von 350 bis 700 g/eq; beispielsweise 400, 450, 500, 550, 600 oder 650 g/eq. Daraus kann insbesondere nach der zumindest teilweisen Wärmehärtung der Harzzusammensetzung eine gute Balance zwischen Bruchdehnung und Bruchspannung des dreidimensionalen Objekts vor der Zersetzung der Harzzusammensetzung resultieren.

Das Epoxidharz umfasst vorzugsweise ein aromatisches Epoxidharz, insbesondere ein aromatisches Epoxidharz ausgewählt aus der Gruppe umfassend ein Bisphenol-basiertes Epoxidharz, ein Novolak-basiertes Epoxidharz, ein Phenol-basiertes Epoxidharz und ein Naphthalin-basiertes Epoxidharz, oder eine Mischung davon, wobei das Bisphenol-basierte Epoxidharz vorzugsweise ein Bisphenol-A-basiertes Epoxidharz umfasst. Diese Epoxidharze sind schnell (aus-)härtbar, stellen gute mechanische Eigenschaften bereit und sind gut mit Polyesterharzen mischbar.

Vorzugsweise umfasst die Harzzusammensetzung ein Epoxidharz bzw. mehrere Epoxidharze, wobei das Epoxidharz bzw. zumindest eines der Epoxidharze ein Epoxid-Äquivalentgewicht von 350 bis 600 g/eq, noch bevorzugter von 400 bis 500 g/eq, und eine Viskosität bei 150 °C von 10,0 Pa s oder darunter aufweist, vorzugsweise alle Epoxidharze. Dadurch kann nicht nur eine besonders gute Verarbeitbarkeit des Ausgangsmaterials bereitgestellt werden, sondern auch eine gute Stabilität, vor allem eine gute Zug- und Druckfestigkeit, des dreidimensionalen Objekts vor der Zersetzung der Harzzusammensetzung, insbesondere nach der zumindest teilweisen Wärmehärtung.

Mögliche kommerziell erhältliche Epoxidharze, die alleine oder in Kombination verwendet werden können, sind Kukdo KD-213 (Kukdo Chemical, Südkorea; Tg von 88-98 °C, EEW von 730-840 g/eq, Viskosität bei 150 °C von 3,5-7,0 Pa s); Kukdo KD-2011 (Kukdo Chemical; Tg von 90-100 °C, EEW von 400-500 g/eq, Viskosität bei 150 °C von 1,0-3,5 Pa s); D.E.R. 6225 HT (Olin Corporation, US; Tg von 87-95 °C, EEW von 650-725 g/eq, Viskosität bei 150 °C von 0,8-1,6 Pa s); D.E.R. 642U-20 (Dow Chemical Company; Tg von 89-97 °C, EEW von 500-560 g/eq, Viskosität bei 150 °C von 1.9-3.3 Pa s); D.E.R. 6510-HT (Olin Corporation, US; EEW von 410-440 g/eq, Viskosität bei 150 °C von 7,5-9,5 Pa s; Novolak-modifiziertes Epoxidharz); D.E.R. 671 (Olin Corporation, US; Tg von 75-85 °C, EEW von 475-550 g/eq, Viskosität bei 150 °C von 0,4-0,95 Pa s); D.E.R. 692 (Olin Corporation, US; Tg von 89-97 °C, EEW von 660-720 g/eq, Viskosität bei 150 °C von 1,6-2,4 Pa s); Araldite GT6064 (Huntsman, US; Tg von 82-90 °C, EEW von 600-700 g/eq, Viskosität bei 150 °C von 0,6-1,5 Pa s); Araldite GT7220 (Huntsman, US; Tg von 95°C, EEW von 520-545 g/eq, Viskosität bei 175°C von 1-2 Pa s); Epon 165 (Westlake Epoxy, US; Schmelzbereich von 90-100 °C, EEW 200-230 g/eq, Viskosität bei 150°C von 3-5 Pa s); Epiclon 152 (DIC Corporation, Japan; Tg von 56-66 °C, EEW von 340-380 g/eq, Viskosität bei 150 °C von 1,0 Pa s); Epiclon HP-4710 (DIC Corporation, Japan; Tg von 95-96 °C; EEW von 160-171 g/eq; Viskosität bei 150 °C von 1 Pa s).

Die Harzzusammensetzung umfasst vorzugsweise ein elastomermodifiziertes Epoxidharz. Dadurch kann die Schlagzähigkeit des dreidimensionalen Objekts verbessert und dessen Sprödigkeit verringert werden. Bevorzugt umfasst die Harzzusammensetzung das elastomermodifizierte Epoxidharz zusätzlich zu einem anderen Harz, vorzugsweise zusätzlich zu einem Epoxidharz (d.h. einem nicht elastomermodifizierten Epoxidharz) und/oder einem Polyesterharz, besonders bevorzugt zusätzlich zu einem nicht elastomermodifizierten Epoxidharz und/oder einem carboxylierten Polyesterharz. Dann kann eine besonders gute Balance zwischen den Schlagzähigkeits- und Steifigkeitseigenschaften des dreidimensionalen Objekts erreicht werden.

Das Ausgangsmaterial umfasst das elastomermodifizierte Epoxidharz vorzugsweise in einer Menge von 1 Gew% oder darüber, bevorzugter von 5 Gew% oder darüber, noch bevorzugter von 1 bis 10 Gew%, am bevorzugtesten von 5 bis 10 Gew%, bezogen auf das Gesamtgewicht des Ausgangsmaterials. Vorzugsweise umfasst das Ausgangsmaterial das elastomermodifizierte Epoxidharz zusätzlich zu einem weiteren, nicht elastomermodifizierten Epoxidharz in einer Menge von 1 bis 50 Gew%, bevorzugter von 5 bis 50 Gew%, noch bevorzugter von 20 bis 50 Gew%, noch bevorzugter von 30 bis 40 Gew%, bezogen auf den Gesamtgewichtsanteil an Epoxidharz im Ausgangsmaterial. Dadurch kann die Schlagzähigkeit des dreidimensionalen Objekts maßgeblich verbessert werden, ohne dessen Stabilität, insbesondere Steifigkeit, signifikant zu reduzieren.

Das Epoxid-Äquivalentgewicht des elastomermodifizierten Epoxidharzes liegt vorzugsweise bei 600 g/eq oder darüber, bevorzugt bei 800 g/eq oder darüber, bevorzugter bei 900 g/eq oder darüber, noch bevorzugter im Bereich von 900 bis 1500 g/eq, besonders bevorzugt im Bereich von 1200 bis 1500 g/eq. Dann kann das elastomermodifiziertes Epoxidharz gut in das sich bei der zumindest teilweisen Wärmehärtung ausbildende dreidimensionale Netzwerk eingebaut werden.

Die Glasübergangstemperatur des elastomermodifizierten Epoxidharzes liegt vorzugsweise bei 60 °C oder darüber, bevorzugter bei 80 °C oder darüber, noch bevorzugter im Bereich von 80 bis 150 °C, noch bevorzugter von 85 bis 120 °C. Bei der additiven Fertigung des dreidimensionalen Objekts kann die Glasübergangstemperatur dann überschritten werden, wodurch die Verarbeitbarkeit des Ausgangsmaterials verbessert werden kann. Bei einem L-PBF Verfahren kann dies wiederum auch erst bei Bestrahlung durch den Laser geschehen.

Die durchschnittliche Funktionalität des elastomermodifizierten Epoxidharzes ist vorzugsweise zwei oder mehr, bevorzugter drei oder mehr. Das Epoxidharz kann dann effizient härten, und eine optimale Vernetzungsdichte kann sich ausbilden. Die durchschnittliche Funktionalität ist dabei bezogen auf die Anzahl der funktionellen Gruppen des Epoxidharzes (d.h. nicht auf funktionelle Gruppen des Elastomers, falls vorhanden).

Vorzugsweise weist das elastomermodifizierte Epoxidharz einen Elastomergehalt von 20 bis 60 Gew% auf, bevorzugter von 20 bis 50 Gew%, noch bevorzugter von 25 bis 40 Gew%, bezogen auf das Gewicht des elastomermodifizierten Epoxidharzes. Dann kann das Verhältnis zwischen Schlagzähigkeit und Steifigkeit gut eingestellt werden.

Das elastomermodifizierte Epoxidharz umfasst vorzugsweise einen Polyacrylat-Kautschuk (ACM), einen Acrylnitrilbutadien-Kautschuk (NBR) und/oder einen hydrierten Acrylnitrilbutadien-Kautschuk (HNBR), besonders bevorzugt einen carboxylierten NBR und/oder HNBR, insbesondere einen carboxyl-terminierten Acrylnitrilbutadien-Kautschuk (CTBN). Die funktionellen Gruppen des Kautschuks können ggf. mit einem geeigneten Härter reagieren und dadurch ein dreidimensionales Netzwerk ausbilden, wodurch die Schlagzähigkeit des dreidimensionalen Objekts noch weiter verbessert werden kann. Die Verwendung eines carboxylierten Kautschuks hat den Vorteil, dass für dessen Vernetzung kein separater Härter benötigt wird, sondern dass der für die Härtung des Harzes, insbesondere des Epoxidharzes und/oder des Polyesterharzes, verwendete Härter auch für die Vernetzung des Kautschuks eingesetzt werden kann. Auch können die Carboxylgruppen des Kautschuks ggf. mit funktionellen Gruppen des Harzes, insbesondere mit Epoxidgruppen des Epoxidharzes, und/oder mit Carboxylgruppen und/oder Hydroxylgruppen des carboxylierten und/oder hydroxylierten Polyesterharzes bei der zumindest teilweisen Wärmehärtung reagieren und so die Stabilität des dreidimensionalen Objekts weiter verbessern.

Mögliche kommerziell erhältliche, elastomermodifizierte Epoxidharze, die alleine oder in Kombination verwendet werden können, sind Hypox RK84L (Huntsman, US; Tg von 100 °C, EEW von 1250-1500 g/eq); HyPox RK820 (Huntsman, US; Tg von 75-95 °C, EEW von 850-1050 g/eq); D.E.R. 858 (Olin Corporation, US; Tg von 95-105 °C, EEW von 380-420 g/eq); FORTEGRA 104 (Olin Corporation; EEW von 960-1060 g/eq); FORTEGRA 304 (Olin Corporation; Tg von 105-115 °C, EEW von 920-1090 g/eq); KSR-1000 (Kukdo Chemical, Korea; EEW von 1100-1300 g/eq, Silikon-modifiziertes Epoxidharz); KR-102 (Kukdo Chemical, Korea; EEW von 1100-1300 g/eq, CTBN modifiziertes Epoxidharz); KR-101 (Kukdo Chemical, Korea; CTBN-modifiziertes Epoxidharz); KR-104L (Kukdo Chemical, Korea; EEW von 1100-1300 g/eq, CTBN-modifiziertes Epoxidharz); KR-692 (Kukdo Chemical, Korea, EEW von 675-775 g/eq, Acryl-Elastomer-modifiziertes Epoxidharz); KR-693 (Kukdo Chemical, Korea, EEW von 800-900 g/eq, Acryl-Elastomer-modifiziertes Epoxidharz) Struktol Polydis 3610 (Schill+Seilacher "Struktol" GmbH, Deutschland; EEW von 600 g/eq, Nitril-modifiziertes Epoxidharz); Polycavyt 3632 (Schill+Seilacher "Struktol" GmbH, Deutschland; EEW von 600 g/eq, Fettsäuremodifiziertes Epoxidharz basierend auf DGEBA).

Die wärmehärtbare Harzzusammensetzung umfasst vorzugweise einen Härter zur Härtung des wärmehärtbaren Harzes. Mit dem Härter kann das Harz unter Zufuhr von Wärmenergie gehärtet werden. Die Wärmeenergie kann z.B. durch einen Laserstrahl, durch einen Konvektionsofen oder durch IR-Strahlung erzeugt werden.

Der Härter kann ausgewählt sein aus der Gruppe umfassend einen Härter enthaltend eine funktionelle Gruppe, einen Initiator und einen Katalysator, oder eine Mischung davon. Durch die Wahl eines entsprechenden Härters, bzw. einer Kombination von zwei oder mehreren Härtern, können die Härtungstemperatur, die Geschwindigkeit der Härtungsreaktion und/oder die resultierende Vernetzungsdichte an die jeweiligen Anforderungen angepasst werden (z.B. an den Typ des Harzes, und/oder an die Temperatur und/oder Zeit der Wärmehärtung in Schritt (c) und optional in Schritt (b)). Unter einem di- oder mehrfunktionellen Härter wird ein Härter verstanden, der durch eine Polyadditions- und/oder Polykondensationsreaktion mit funktionellen Gruppen des Harzes reagieren und dadurch in das sich ausbildende dreidimensionale Netzwerk eingebaut werden kann. Unter einem Initiator wird ein Härter verstanden, der die Härtungsreaktion des Harzes durch Bildung einer reaktiven Spezies (z.B. eines Radikals und/oder eines Ions, insbesondere eines Kations) einleitet. Unter einem Katalysator wird ein Härter verstanden, der die Härtungsreaktion des Harzes allein (im Falle von selbstvernetzenden Harzen) oder zwischen dem Harz und einem weiteren Härter, vorzugsweise einen Härter enthaltend eine funktionelle Gruppe, kinetisch beschleunigt.

Der Härter enthaltend eine funktionelle Gruppe weist vorzugsweise eine durchschnittliche Funktionalität von zwei bis vier auf, bevorzugter von zwei bis drei. Dadurch kann eine effiziente Reaktion mit dem Harz erreicht werden, und auch eine Vernetzungsdichte in einem optimalen Bereich kann daraus resultieren.

Der Härter umfasst vorzugsweise einen latenten Härter. Dann kann eine unerwünschte Vorhärtung, insbesondere bei Herstellung (z.B. Extrusion), Lagerung, und/oder Transport des Ausgangsmaterials und/oder bei der additiven Fertigung, vermieden werden. Unter einem latenten Härter wird dabei ein Härter verstanden, dessen Härtungstemperatur signifikant oberhalb der Raumtemperatur (25 °C) liegt, und der bei Raumtemperatur keine oder nur eine langsame chemische Reaktion in einem vernachlässigbaren Ausmaß eingehen kann. Funktionelle Gruppen des latenten Härters können für diese Zwecke mit Schutzgruppen versehen sein, welche erst bei einer bestimmten, erhöhten Temperatur abgespalten werden. Eine Härtung kann somit erst erfolgen, wenn diese Temperatur erreicht bzw. überschritten wurde.

Die funktionelle Gruppe des Härters ist vorzugsweise ausgewählt aus der Gruppe umfassend eine Amingruppe, eine Amidgruppe, eine Cyanamidgruppe (insbesondere eine Dicyandiamidgruppe), eine Säuregruppe (insbesondere eine Carboxylgruppe), eine Anhydridgruppe (insbesondere eine Anhydridgruppe einer Carboxylsäure), eine Epoxidgruppe, eine Hydroxylgruppe, eine Cyanidgruppe, eine Vinylgruppe und eine Allylgruppe, oder eine Mischung davon. Auch andere, einer Fachperson geläufige funktionelle Gruppen sind möglich, solange diese zur Vernetzung des eingesetzten wärmehärtenden Harzes geeignet sind. Bevorzugt enthält der Härter mindestens eine Amingruppe und/oder mindestens eine Amidgruppe, bevorzugter zwei oder mehr Amingruppen und/oder zwei oder mehr Amidgruppen. Dadurch kann die wärmehärtbare Harzzusammensetzung effizient gehärtet werden. Der Härter weist vorzugsweise eine Aminzahl im Bereich von 150 bis 240 mg KOH/g auf, bevorzugter von 180 bis 210 mg KOH/g. Dann kann die Härtungsreaktion besonders effizient erfolgen.

Der Härter umfasst vorzugsweise Dicyandiamid und/oder ein Polyamin, besonders bevorzugt besteht der Härter aus dem Dicyandiamid, dem Polyamin oder einer Kombination davon. Das kann insbesondere dann vorteilhaft sein, wenn die Harzzusammensetzung ein Polyesterharz und ein Epoxidharz umfasst, weil beide dieser Harze mit funktionellen Gruppen des Dicyandiamids bzw. des Polyamins reagieren können. Das Polyamin kann ein aliphatisches Polyamin sein, was die Kettenbeweglichkeit des Härters bei einer gegebenen Temperatur erhöhen kann, sodass die Härtung schneller erfolgen kann. Ebenso sind aliphatische Amine üblicherweise reaktiver als aromatische Amine, wodurch die Wärmehärtung bereits bei einer niedrigeren Temperatur erfolgen kann, beispielsweise bereits teilweise bei der additiven Fertigung. Ebenso kann es vorteilhaft sein, wenn der Härter ein Dicyandiamid umfasst, da dessen funktionelle Gruppen erst bei höherer Temperatur - verglichen mit Aminen - reaktiv sind und somit die Härtungsreaktion besonders gut kontrolliert werden kann.

Der Initiator ist beispielsweise ein ionischer Initiator, insbesondere ein kationischer Initiator. Dadurch kann z.B. eine Homopolymerisation des Epoxidharzes katalysiert werden. Der Katalysator umfasst vorzugsweise eine Lewis-Säure und/oder eine Lewis-Base, insbesondere umfasst der Katalysator bevorzugt eine Imidazolgruppe. Dann kann die Härtungsreaktion effizient erfolgen.

Bevorzugt umfasst das Ausgangsmaterial den Härter in einer Menge von 0,1 Gew% oder mehr, bevorzugter von 0,5 Gew% oder mehr, noch bevorzugter von 0,7 Gew% oder mehr, insbesondere von 0,5 bis 10,0 Gew%; von 0,8 bis 5,5 Gew%; von 1,0 bis 4,0 Gew%; von 0,8 bis 2,0 Gew%; oder von 0,8 bis 1,5 Gew%; wie z.B. 0,9 Gew%; 1,2 Gew%; oder 1,4 Gew%, bezogen auf das Gesamtgewicht des Ausgangsmaterials. Dadurch kann eine gute Balance zwischen der Geschwindigkeit der Härtungsreaktion und der Vernetzungsdichte erhalten werden.

Mögliche kommerziell erhältliche Härter, die alleine oder in Kombination verwendet werden können, sind Aradur 835CH (Huntsman, US; aliphatisches Polyamin); Aradur 2844 (Huntsman, US; Dicyandiamid-Derivat); EPIKURE P-104 (Hexion, US; Dicyandiamid); EPIKURE P-108 (Hexion, US; Dicyandiamid); 2-Ethylimidazol (Donau Chemie, Österreich); Technicure D-10 (A&C Catalysts, US; Dicyandiamid); Dyhard 100S (Alz Chem, Deutschland; Dicyandiamid); Dyhard UR300 (Alz Chem, Deutschland; Uron-basierter Initiator); Dicyanex 1200 (Evonik, Deutschland; Dicyandiamid); CUREZOL 2MZ (Shikoku Chemical Corporation, Japan / Evonik, Deutschland; Imidazol-basierter Härter); CUREZOL C17Z (Shikoku Chemical Corporation, Japan / Evonik, Deutschland; Imidazol-basierter Härter); CUREZOL 1B2PZ (Shikoku Chemical Corporation, Japan / Evonik, Deutschland; Imidazol-basierter Härter); OMICURE DDA 5 (Huntsman CVC Thermoset Specialities, US; Dicyandiamid); OMICURE 33-DDA (Huntsman CVC Thermoset Specialities, Diaminodiphenylsulfon); Eutomer B31 (Whyte Chemicals, Großbritannien; 2-Phenylimidazolin), BENOX A-75 (United Initiators, Deutschland; Dibenzoylperoxid); PEROXAN PK295P (PERGAN GmbH, Deutschland; Peroxyketal).

Es ist bevorzugt, wenn die wärmehärtbare Harzzusammensetzung ein Epoxidharz und einen Härter für das Epoxidharz umfasst. Der Härter und das Epoxidharz können bei erhöhter Temperatur in Schritt (c), und optional auch in Schritt (b), miteinander reagieren, sodass das Epoxidharz härtet, vorzugsweise aushärtet. Dann kann die Harzzusammensetzung eine gute Stabilität bereitstellen.

Bevorzugt umfasst die Harzzusammensetzung mindestens zwei wärmehärtbare Harze und einen Härter. Durch den Einsatz von zwei wärmehärtbaren Harzen können die Eigenschaften des Ausgangsmaterials gut an die jeweiligen Erfordernisse (z.B. das additive Fertigungsverfahren) angepasst werden, insbesondere im Hinblick auf die Verarbeitungseigenschaften des Ausgangsmaterials, aber auch im Hinblick auf die mechanischen Eigenschaften des additiv gefertigten dreidimensionalen Objekts.

Alternativ umfasst die Harzzusammensetzung bevorzugt mindestens zwei wärmehärtbare Harze und mindestens zwei Härter. Dann kann jeweils ein Härter an eines der wärmehärtbaren Harze angepasst werden, insbesondere im Hinblick auf Art und Anzahl der funktionellen Gruppen des wärmehärtbaren Harzes. Auch die Härtungsgeschwindigkeit bei einer gegebenen Temperatur und/oder die resultierende Vernetzungsdichte kann/können dann noch besser eingestellt werden. Ebenso kann einer der mindestens zwei Härter ein Härter enthaltend eine funktionelle Gruppe sein und der andere Härter ein Katalysator.

Die zwei wärmehärtbaren Harze umfassen vorzugsweise mindestens ein Epoxidharz und mindestens ein carboxyliertes Polyesterharz. Dadurch kann eine besonders gute Balance zwischen den Verarbeitungseigenschaften des Ausgangsmaterials und den mechanischen Eigenschaften des dreidimensionalen Objekts (vor und in Schritt (d)) erreicht werden. Vorzugsweise enthält zumindest ein Härter dann mindestens eine Amingruppe, vorzugsweise eine aliphatische Amingruppe; und/oder mindestens eine Amidgruppe, vorzugsweise eine Dicyandiamidgruppe. Das ist vorteilhaft, weil der Härter dann sowohl mit dem Epoxidharz als auch mit dem carboxylierten Polyesterharz reagieren kann.

Das bereitgestellte Ausgangsmaterial umfasst weiters einen Sinterwerkstoff. Der Sinterwerkstoff weist vorzugsweise eine Dichte im Bereich von 2,0 bis 16,0 g/cm³ auf, bevorzugter von 2,0 bis 10,0 g/cm³, noch bevorzugter von 2,5 bis 6,0 g/cm³, besonders bevorzugt von 2,5 bis 4,5 g/cm³. Das dreidimensionale Objekt kann dann auch nach der Zersetzung der Harzzusammensetzung eine gute Formstabilität beibehalten.

Das Ausgangsmaterial umfasst den Sinterwerkstoff vorzugsweise in einer Menge von 20 Vol% oder mehr, bevorzugter von 25 Vol% oder mehr, noch bevorzugter von 30 Vol% oder mehr, noch bevorzugter von 35 Vol% oder mehr, besonders bevorzugt von 40 Vol% oder mehr, bezogen auf das Gesamtvolumen des Ausgangsmaterials. Daraus kann sich eine geringere Porosität des dreidimensionalen Objekts ergeben (weil der Anteil der Harzzusammensetzung geringer ist, je höher der Anteil des Sinterwerkstoffs ist), und dementsprechend eine geringere Änderung von dessen Form bei der Wärmebehandlung in Schritt (e), insbesondere bei einem Sintern. Das dreidimensionale Objekt kann dann eine besonders geringe Schwindung aufweisen, wodurch das Risiko einer Deformation reduziert werden kann.

Gewichtsmäßig ausgedrückt umfasst das Ausgangsmaterial den Sinterwerkstoff vorzugsweise in einer Menge von 40 Gew% oder mehr, bevorzugt von 50 Gew% oder mehr, noch bevorzugter von 55 Gew% oder mehr; bevorzugt im Bereich von 40 bis 95 Gew%, bevorzugter von 50 bis 80 Gew%, noch bevorzugter von 50 bis 75 Gew%, besonders bevorzugt von 53 bis 70 Gew%, bezogen auf das Gesamtgewicht des Ausgangsmaterials, insbesondere dann, wenn der Sinterwerkstoff eine Dichte im zuvor genannten Bereich aufweist.

Der Sinterwerkstoff weist vorzugweise eine d₅₀-Partikelgröße von 0,02 µm bis 75 µm auf, bevorzugter von 0,1 µm bis 50 µm, vorzugsweise mit einer möglichst engen Partikelgrößenverteilung. Dann kann der Sinterwerkstoff besonders gut mit der Harzzusammensetzung vermischt bzw. coextrudiert werden, sodass ein homogenes Ausgangsmaterial erhalten werden kann. Auch kann sich bei der Wärmebehandlung dann ein homogenes Sintergefüge ausbilden.

Der Sinterwerkstoff ist vorzugsweise ein keramischer Vorläufer. Darunter wird insbesondere ein keramischer Rohstoff verstanden, aus welchem ein keramisches Objekt hergestellt werden kann. Mit dem erfindungsgemäßen Verfahren kann unter Verwendung eines keramischen Vorläufers ein hochpräzises, dreidimensionales, keramisches Objekt erhalten werden.

Vorzugsweise ist der Sinterwerkstoff ausgewählt aus der Gruppe umfassend Titandioxid, Titancarbid, Titancarbonitrid, Zirkonoxid, Niobcarbid, Magnesiumoxid, Yttriumoxid, Wolframcarbid, Borcarbid, Bornitrid, Siliciumcarbid, Siliciumdioxid, Siliciumnitrid, Aluminiumoxid, Aluminiumhydroxid und Aluminiumnitrid, oder eine Mischung davon. Bevorzugter ist der Sinterwerkstoff ausgewählt aus der Gruppe umfassend Titandioxid, Zirkonoxid, Siliciumcarbid, Aluminiumhydroxid und Aluminiumoxid, oder eine Mischung davon. Besonders bevorzugt ist der Sinterwerkstoff ausgewählt aus der Gruppe umfassend Titandioxid, Aluminiumoxid, Aluminiumhydroxid, Siliciumcarbid oder eine Mischung davon. Diese Sinterwerkstoffe sind besonders geeignet, um im additiven Fertigungsverfahren gemeinsam mit der Harzzusammensetzung verarbeitet zu werden, und sie lassen sich durch die Wärmbehandlung in Schritt (e) gut in ein keramisches Objekt überführen.

Der Sinterwerkstoff kann bevorzugt Aluminiumhydroxid umfassen. Beim Erhitzen von Aluminiumhydroxid kann es zu einer Dehydratisierung kommen, wobei Aluminiumoxid gebildet und Wasser abgespalten werden kann. Damit einhergehen kann ein höherer Masseverlust, was zu einer etwas höheren Porosität des dreidimensionalen Objekts nach der Wärmebehandlung (Schritt (e)) führen kann. Wenn ein dreidimensionales Objekt mit einer vergleichsweise hohen Porosität hergestellt werden soll, kann die Verwendung von Aluminiumhydroxid daher vorteilhaft sein. Jedoch kann auch durch Sintern des dreidimensionalen Objekts dessen Dichte erhöht und dessen Porosität verringert werden, ohne dass damit ein übermäßiger Verlust der geometrischen Verhältnisse einhergeht, sondern ein gesintertes, dreidimensionales Objekt mit einer hohen Präzision erhalten werden kann.

Besonders bevorzugt umfasst der Sinterwerkstoff Titandioxid und/oder Aluminiumoxid. Das dreidimensionale Objekt kann dann nach der Zersetzung der Harzzusammensetzung in Schritt (d) eine besonders gute Stabilität beibehalten. Auch kann die Präzision des dreidimensionalen, keramischen Objekts, welches durch das erfindungsgemäße Verfahren erhalten wird, weiter verbessert werden. Bevorzugt wird das Titandioxid zumindest teilweise oder ausschließlich in Form von Rutil verwendet, weil diese Form eine für die Wärmebehandlung, insbesondere das Sintern, gut geeignete Kristallstruktur aufweist, um nach Schritt (e) ein hochpräzises, dreidimensionales Objekt zu erhalten.

Der Sinterwerkstoff kann beschichtet und/oder oberflächenmodifiziert sein, insbesondere mit Aluminiumoxid, Siliciumdioxid, Zirkonoxid und/oder einem organischen Silan. Dadurch lassen sich die Oberflächeneigenschaften des dreidimensionalen Objekts beeinflussen, insbesondere kann dessen Oberfläche durch die Beschichtung und/oder Oberflächenmodifizierung vergleichsweise glatt bzw. glänzend gemacht werden. Vorzugsweise umfasst der beschichtete und/oder oberflächenmodifizierte Sinterwerkstoff Titandioxid, da sich dieses gut beschichten bzw. modifizieren lässt. Besonders bevorzugt umfasst der beschichtete Sinterwerkstoff mit Zirkonoxid beschichtetes Titandioxid, weil diese beiden Materialien eine sehr gute Kompatibilität aufweisen, sodass die Beschichtung gut am Sinterwerkstoff haften kann. Eine Beschichtung und/oder Oberflächenmodifizierung des Sinterwerkstoffs kann sich ebenfalls vorteilhaft auf die Kompatibilität mit der Harzzusammensetzung auswirken.

Mögliche kommerziell erhältliche Sinterwerkstoffe, die alleine oder in Kombination verwendet werden können, sind Portafill A40 (Sibelco Europe, Deutschland; synthetisches Aluminiumhydroxid); Sepasil EK (HPF Minerals, Quarzwerke, Deutschland; Aluminiumoxid); Silatherm Plus 1432 (HPF Minerals, Quarzwerke, Deutschland; Aluminiumoxid); AA-04 (Sumitomo; Japan; Aluminiumoxid); AKP-20 (Sumiomo Chemical, Japan; Aluminiumoxid); Alodur ZWSK F500 (Imerys, Frankreich; Aluminiumoxid); Tioxide TR81 (Huntsman, US; oberflächenbehandeltes Titandioxid); TiSelect6200 (Chemours, Niederlande; oberflächenbehandeltes Titandioxid); Kronos 2300 (Kronos, US; oberflächenbehandeltes Titandioxid); Kronos 2500 (Kronos, US; oberflächenbehandeltes Titandioxid); Kronos 2450 (Kronos, US; oberflächenbehandeltes Titandioxid); Kronos 3025 (Kronos, US; Titandioxid); Kronos 2160 (Kronos, US; Titandioxid); Kronos 2310 (Kronos, US; Titandioxid); Kronos 2360 (Kronos, US, Titandioxid); Kronos 1002 (Kronos, US; Titandioxid, Anatas-Typ); Aeroxide P25 (Evonik, DE, Titandioxid, Anatas-Typ); TiONA 592 (Tronox, US; oberflächenbehandeltes Titandioxid); TiONA 826 (Tronox, US; oberflächenbehandeltes Titandioxid); TiKON 33 (Tronox, US; oberflächenbehandeltes Titandioxid); Siliciumcarbid F800 (ESK, Deutschland), Siliciumcarbid F1200 (ESK, Deutschland

Das Ausgangsmaterial umfasst vorzugsweise ein Additiv. Dadurch können bestimmte Eigenschaften der Harzzusammensetzung verbessert werden. Das Additiv kann ausgewählt sein aus der Gruppe umfassend ein Entgasungsmittel, einen Absorber, einen Haftvermittler, einen Lichtstabilisator, einen UV-Stabilisator, ein Strukturierungsmittel, ein Pigment, einen Füllstoff und ein Verarbeitungshilfsmittel, oder eine Mischung davon.

Vorzugsweise umfasst das Ausgangsmaterial ein Entgasungsadditiv, um während der beim Verfahren verwendeten Temperatur im gasförmigen Zustand vorliegende Komponenten kontrolliert entfernen zu können. Vorzugsweise umfasst das Ausgangsmaterial das Entgasungsadditiv in einer Menge von 0,1 bis 3 Gew%, bevorzugter von 0,1 bis 1,0 Gew%, bezogen auf das Gesamtgewicht des Ausgangsmaterials. Durch die Zugabe des Entgasungsadditiv in dieser Menge ist eine gute Entgasung möglich.

Das Ausgangsmaterial umfasst vorzugsweise ein Verarbeitungshilfsmittel, insbesondere ein Verlaufsmittel, um die Verarbeitungseigenschaften der Harzzusammensetzung weiter zu verbessern, insbesondere beim additiven Fertigungsverfahren. Durch die Verwendung eines Verlaufsmittels kann die Kompatibilität zwischen der Harzzusammensetzung und dem Sinterwerkstoff erhöht werden, was mechanische Eigenschaften und Oberflächeneigenschaften des dreidimensionalen Objekts verbessern kann.

Vorzugsweise umfasst das Ausgangsmaterial das Verlaufsmittel in einer Menge von 0,5 bis 5,0 Gew%, bevorzugter von 2,0 bis 3,0 Gew%, bezogen auf das Gesamtgewicht des Ausgangsmaterials. Dadurch kann die Homogenität der Oberfläche des dreidimensionalen Objekts erhöht werden.

Das Verlaufsmittel umfasst bevorzugt eine Kieselsäure und/oder ein Acrylharz. Die bereitgestellten Verlaufseigenschaften sind besonders gut, sodass hierdurch ein dreidimensionales Objekt mit einer sehr homogenen Oberfläche erhalten werden kann. Der Begriff "Acrylharz" umfasst Monomere, Oligomere und Polymere enthaltend eine Acrylgruppe bzw. eine Methacrylgruppe.

Das Ausgangsmaterial umfasst vorzugsweise ein Schwarzpigment als Absorber. Dadurch kann die Energieaufnahme des Ausgangsmaterials in Schritt (b) verbessert werden, und dementsprechend dessen Verarbeitbarkeit in der additiven Fertigung. Dies kann insbesondere dann vorteilhaft sein, wenn ein Sinterwerkstoff verwendet wird, welcher das im additiven Fertigungsverfahren verwendete Laserlicht zumindest teilweise reflektiert und/oder absorbiert, was den Energieeintrag in die Harzzusammensetzung verringern kann.

Vorzugsweise umfasst das Ausgangsmaterial das Schwarzpigment in einer Menge von 0,1 bis 5 Gew%, bevorzugter von 0,1 bis 3,0 Gew%, besonders bevorzugt von 0,3 bis 1,5 Gew%, bezogen auf das Gesamtgewicht des Ausgangsmaterials. Dann können reflektierende bzw. absorbierende Eigenschaften des Sinterwerkstoffs gut kompensiert werden.

Das Schwarzpigment umfasst bevorzugt einen Russ, besonders bevorzugt einen Russ mit einer Ölabsorption im Bereich von 50 bis 120 ml/100g, vorzugsweise ermittelt gemäß der Norm ASTM D2414, und/oder mit einer spezifischen Oberfläche im Bereich von 100 bis 300 m²/g, vorzugsweise ermittelt gemäß der Norm ASTM D6556. Alternativ zum oder in Kombination mit dem Schwarzpigment kann ein Absorber, welcher die im jeweiligen Wellenlängenbereich eingestrahlte Energie zumindest teilweise absorbiert, eingesetzt werden.

Mögliche kommerziell erhältliche Additive, die alleine oder in Kombination verwendet werden können, sind Benzoin (Harke Chemicals, Deutschland; Entgasungsadditiv); Ceretan MA 7020 (Münzing, Deutschland; Entgasungsadditiv); Deurex A20K (Deurex, Deutschland; Entgasungsadditiv); Raven Carbon Black (Birla Carbon; US; Schwarzpigment, Russ); Printex Beads (Orion Engineered Carbons, Luxemburg; Schwarzpigment, Russ); IRASORB CTOM10 (PC 6012 IR (Seta 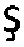 Masterbatch, Türkei; IR-Absorber); StanoStat CPM10F (Keeling & Walker, GB; IR-Absorber); Nyacol SN902SD (NYACOL Nano Technologies, US; IR-Absorber); IRASORB BITO (Keeling & Walker, GB; IR-Absorber); Nyacol SN902SD (NYACOL Nano Technologies, US; IR-Absorber); BYK-3900P (BYK, Deutschland; Verlaufsmittel); BYK-3933P (BYK, Deutschland; Verlaufsmittel); Modaflow Pulver 6000 (Allnex, Österreich; Verlaufsmittel); Resiflow PL200 (Worlée-Chemie, Deutschland; Verlaufsmittel).

In Schritt (a) wird das bei 25 °C feste Ausgangsmaterial umfassend eine wärmehärtbare Harzzusammensetzung und einen Sinterwerkstoff bereitgestellt. Das bereitgestellte Ausgangsmaterial kann durch jedes Verfahren erhalten werden, das es ermöglicht, die Harzzusammensetzung (umfassend z.B. Harze, Härter, Additive) und den Sinterwerkstoff homogen miteinander zu mischen. Bei der Herstellung des Ausgangsmaterials wird vorzugsweise die Temperatur unterhalb der Härtungstemperatur gehalten bzw. ein Herstellungsschritt mit einer Temperatur bei oder oberhalb der Härtungstemperatur sehr rasch durchgeführt, um eine Vorhärtung zu vermeiden bzw. zumindest gering zu halten.

Vorzugsweise wird das Ausgangsmaterial vor Schritt (a) extrudiert, insbesondere in einem Doppelschneckenextruder. Dabei kann die Harzzusammensetzung beim Mischen mit dem Sinterwerkstoff in einem plastifizierten Zustand vorliegen, wodurch ein homogenes Ausgangsmaterial erhalten werden kann. Alternativ kann auch nur die Harzzusammensetzung extrudiert und der Sinterwerkstoff zu einem späteren Zeitpunkt, beispielsweise nach einer Vermahlung der extrudierten Harzzusammensetzung, in einem Trockenmischprozess beigemischt werden. Ebenso kann es vorteilhaft sein, eine doppelte Extrusion durchzuführen, insbesondere wenn im Ausgangsmaterial ein hoher Anteil an Sinterwerkstoff vorgesehen ist.

Vorzugsweise wird ein erster Teil des Sinterwerkstoffs in einem ersten Extrusionsschritt mit der Harzzusammensetzung extrudiert und nachfolgend ein zweiter Teil des Sinterwerkstoffs in einem zweiten Extrusionsschritt mit der Harzzusammensetzung extrudiert. Dabei liegen der erste Teil und der zweite Teil des Sinterwerkstoffs vorzugsweise jeweils im Bereich von 10 bis 90 Gew%, bevorzugter von 30 bis 70 Gew%, noch bevorzugter von 40 bis 60 Gew%, bezogen auf das Gesamtgewicht des Sinterwerkstoffs. Durch eine solche zweistufige Extrusion kann die Homogenität des Ausgangsmaterials maßgeblich verbessert werden. Ein im ersten Extrusionsschritt erhaltenes Extrudat kann vor dem zweiten Extrusionsschritt zerkleinert werden, insbesondere kann es granuliert werden. Beispielsweise können 50 Gew% des vorgesehen Sinterwerkstoffs in einem ersten Schritt mit der Harzzusammensetzung extrudiert werden. Das so erhaltende Extrudat kann dann granuliert und anschließend in einem zweiten Schritt unter Zugabe der übrigen 50 Gew% des vorgesehen Sinterwerkstoffs erneut extrudiert werden.

Eine Drehzahl bei der Extrusion liegt vorzugsweise im Bereich von 400 bis 1400 UpM, bevorzugter von 600 bis 1200 UpM. Dadurch kann eine gute Mischwirkung erreicht werden, wobei gleichzeitig ein aufgrund von Scherung erfolgender Materialabbau bzw. Vorreaktionen geringgehalten bzw. verhindert werden können.

Die Temperatur in einer Einzugszone des Extruders liegt vorzugsweise bei 30 °C oder darüber, bevorzugter bei 40 °C oder darüber, besonders bevorzugt im Bereich von 35 bis 45 °C. Die Temperatur in einer Austrittszone des Extruders liegt vorzugsweise bei 80 °C oder darüber, bevorzugter bei 90 °C oder darüber, besonders bevorzugt im Bereich von 80 bis 100 °C. Dadurch kann eine schrittweise Erwärmung erfolgen, um die Harzzusammensetzung in einen plastifizierten Zustand zu bringen, ohne sie dabei thermisch abzubauen bzw. auszuhärten. Die Extrusionsparameter, insbesondere Drehzahl und Temperatur, hängen aber auch jeweils von den eingesetzten Rohstoffen, insbesondere vom wärmehärtbaren Harz und, wenn vorhanden, dem Härter ab und sind an die jeweilige Harzzusammensetzung anzupassen, um einerseits eine ausreichende Dispergierung zu erzielen und andererseits unerwünschte Vorreaktionen zu vermeiden. Diese Anpassungen führt eine Fachperson routinemäßig durch.

Das extrudierte Ausgangsmaterial kann anschließend vermahlen werden. Vorzugsweise wird das Ausgangsmaterial zu einem Pulver vermahlen. Die d₅₀-Partikelgröße, bis zu welcher vermahlen wird, kann variieren, je nachdem, welches additive Fertigungsverfahren in Schritt (b) verwendet wird.

In Schritt (b) wird das dreidimensionale Objekt mittels additiver Fertigung hergestellt. Dadurch kann die Form des dreidimensionalen Objekts nicht nur maßgeschneidert und an die jeweiligen Erfordernisse angepasst werden, sondern durch die Harzzusammensetzung kann auch eine gute Handhabbarkeit des dreidimensionalen Objekts gewährleistet werden, bis die Harzzusammensetzung zersetzt wird. Das durch Schritt (b) erhaltene dreidimensionale Objekt kann auch als "Grünkörper" bzw. "Grünling" bezeichnet werden.

Vorzugsweise wird das dreidimensionale Objekt unter Verwendung von selektivem Lasersintern (L-PBF) hergestellt. Dadurch können auch strukturell komplexe Geometrien realisiert werden. Das Ausgangsmaterial kann beim selektiven Lasersintern schichtweise aufgetragen werden, und zumindest ein Teil jeder Schicht kann mit einem Laser bestrahlt werden, insbesondere mit einem Kohlenstoffdioxid-Laser. Die Dicke jeder Schicht liegt bevorzugt im Bereich von 80 bis 120 µm, bevorzugter von 90 bis 110 µm. Dadurch kann beim nachfolgenden Bestrahlen mit dem Laser ein gleichmäßiger Energieeintrag in die jeweilige Schicht erfolgen.

Eine Energiedichte des Lasers beim selektiven Lasersintern in Schritt (b) liegt vorzugsweise im Bereich von 30 bis 290 mJ/mm², bevorzugter von 90 bis 240 mJ/mm², insbesondere bevorzugt von 60 bis 120 mJ/mm². Durch diese in das Ausgangsmaterial eingebrachte Energie können sich die Harzzusammensetzung und der Sinterwerkstoff innerhalb einer Schicht zumindest teilweise miteinander verbinden und dadurch ein stabiles, dreidimensionales Objekt ausbilden. Ferner kann auch, je nach der Reaktivität der Harzzusammensetzung und den jeweiligen Prozessparametern bei der additiven Fertigung, eine zumindest teilweise Wärmehärtung in einer Schicht und/oder zwischen benachbarten Schichten erfolgen, wodurch die mechanische Stabilität des dreidimensionalen Objekts verbessert werden kann; insbesondere können sich zwei benachbarte Schichten durch eine zumindest teilweise Wärmehärtung der Harzzusammensetzung zumindest teilweise miteinander verbinden. Dadurch kann unter anderem das Entpacken des dreidimensionalen Objekts (d.h. des Grünlings) aus dem Pulverbett und/oder die Entfernung von überschüssigem Ausgangsmaterial erleichtert werden.

Die Temperatur in Schritt (b) liegt vorzugsweise im Bereich von 40 bis 120°C, bevorzugter von 60 bis 100 °C, noch bevorzugter von 65 bis 90 °C. Dadurch kann die Viskosität der Harzzusammensetzung reduziert werden, sodass das Ausgangsmaterial gut verarbeitet werden kann. Mit der Temperatur in Schritt (b) ist die Massetemperatur des schichtweise aufgetragenen Ausgangsmaterials gemeint. In einem Pulverbettverfahren wird diese Temperatur als Pulverbetttemperatur bezeichnet. Selbstverständlich kann die Temperatur an jenen Stellen, an welchen für kurze Zeit selektiv Energie eingebracht wird, beispielsweise durch einen Laser, für kurze Zeit deutlich höher sein.

Die additive Fertigung des dreidimensionalen Objekts in Schritt (b) kann unterhalb einer Härtungstemperatur der Harzzusammensetzung, d.h. ohne eine Wärmehärtung der Harzzusammensetzung, erfolgen. Die einzelnen Schichten des dreidimensionalen Objekts können dadurch zusammenhalten, dass die additive Fertigung bei einer Temperatur oberhalb der Glasübergangstemperatur des Harzes erfolgt (bzw. bei mehreren Harzen bei einer Temperatur oberhalb der Glasübergangstemperatur zumindest eines der Harze), sodass das Harz in einem entropieelastischen, klebrigen Zustand vorliegt, wodurch die Schichten mithilfe des Harzes gut verbunden bzw. verklebt werden können. Dadurch können die Härtungsbedingungen in Schritt (c), insbesondere die Temperatur und Zeitdauer der Wärmehärtung, um einen bestimmten Vernetzungsgrad der Harzzusammensetzung zu erreichen, besser kontrolliert werden.

Vorzugsweise erfolgt die additive Fertigung des dreidimensionalen Objekts in Schritt (b) unter zumindest teilweiser Wärmehärtung der Harzzusammensetzung. Dadurch kann die Temperaturbeständigkeit der Harzzusammensetzung verbessert werden, sodass das dreidimensionale Objekt im nachfolgenden Schritt (c) besser stabilisiert werden kann. Da das dreidimensionale Objekt in Schritt (c) erwärmt wird, um es (weiter) zu härten, können die Viskosität der Harzzusammensetzung und dementsprechend die Formstabilität des dreidimensionalen Objekts ggf. zunächst abnehmen, bevor durch eine Härtung die Vernetzungsdichte weiter erhöht und dadurch die Formstabilität verbessert werden kann. Durch eine zumindest teilweise Wärmehärtung der Harzzusammensetzung schon in Schritt (b) kann eine anfängliche Abnahme der Viskosität der Harzzusammensetzung in Schritt (c) reduziert und somit die Formstabilität verbessert werden. Ebenso kann durch eine teilweise Wärmehärtung in Schritt (b) die mechanische Stabilität des dreidimensionalen Objekts verbessert werden, wodurch dieses einfacher aus einem Pulverbett entpackt und gehandhabt werden kann, ohne dass es zu Beschädigungen kommt.

Vorzugsweise wird zwischen den Schritten (b) und (c) überschüssiges Ausgangsmaterial vom dreidimensionalen Objekt abgetrennt. Überschüssiges Ausgangsmaterial kann recycliert werden, vorzugsweise als Mischung mit frischem Ausgangsmaterial. Es ist auch empfehlenswert, solch ein überschüssiges Ausgangsmaterial vor der Recyclierung einer technischen Überprüfung zu unterziehen, um beispielsweise Ausgangsmaterialien, die bereits vorreagiert und/oder gealtert sind, von einer weiteren Verwendung in der additiven Fertigung auszuschließen. Auch eine Siebung zur Abtrennung verklumpter Partikel aus dem überschüssigen Ausgangsmaterial kann vorteilhaft sein. Die Abtrennung von überschüssigem Ausgangsmaterial erfolgt vorzugsweise mittels Druckluft und/oder durch Sandstrahlen. Dadurch ist nicht nur eine effiziente Abtrennung möglich, sondern können dabei auch Beschädigungen bzw. Deformationen des dreidimensionalen Objekts vermieden werden. Alternativ kann die Abtrennung auch von Hand oder unter Zuhilfenahme von Bürsten und dergleichen vorgenommen werden.

In Schritt (c) wird die Harzzusammensetzung im dreidimensionalen Objekt zumindest teilweise wärmegehärtet. Dadurch können die mechanischen Eigenschaften und somit die Formstabilität des dreidimensionalen Objekts weiter erhöht werden, sodass das Risiko für Beschädigungen bzw. Deformationen in den nachfolgenden Schritten des Verfahrens reduziert werden kann. Die zumindest teilweise Wärmehärtung des dreidimensionalen Objekts kann in einem Konvektionsofen durchgeführt werden. Vorzugsweise wird das dreidimensionale Objekt auf einen Untergrund gestellt, welcher nicht mit der Harzzusammensetzung reagieren kann, etwa mit einer Folie bzw. Platte aus Polytetrafluorethylen (PTFE). Wenn die Harzzusammensetzung in Schritt (b) bereits teilweise gehärtet wird, wird unter der Wärmehärtung in Schritt (c) eine Nachhärtung verstanden.

Um die Harzzusammensetzung zumindest teilweise zu härten, wird in Schritt (c) eine bestimmte, erhöhte Temperatur vorzugsweise für eine Zeitdauer von 2 h oder mehr gehalten, bevorzugter für eine Zeitdauer im Bereich von 2 bis 5 h, noch bevorzugter von 3 bis 4 h. Dann kann ein hoher Vernetzungsgrad der Harzzusammensetzung erreicht werden, vorausgesetzt, die Temperatur entspricht der Härtungstemperatur oder liegt darüber. Die tatsächliche Zeitdauer kann unter anderem in Abhängigkeit der Wanddicke des dreidimensionalen Objekts, des Harzes und/oder des Härters gewählt werden.

Um die Harzzusammensetzung in Schritt (c) zumindest teilweise zu härten, kann die Harzzusammensetzung auf ihre Härtungstemperatur oder darüber erwärmt werden. Vorzugsweise liegt die Temperatur in Schritt (c), welche vorzugsweise für die oben angegebene Zeitdauer gehalten wird, bei 100 °C oder darüber, bevorzugter bei 130 °C oder darüber, noch bevorzugter bei 150 °C oder darüber, noch bevorzugter im Bereich von 100 bis 250 °C, besonders bevorzugt im Bereich von 150 bis 220 °C, beispielsweise von 150 bis 200 °C. Dann kann eine rasche Härtung der Harzzusammensetzung erfolgen. Die Temperatur kann unter anderem in Abhängigkeit der Wanddicke des dreidimensionalen Objekts und der Härtungstemperatur gewählt werden.

Bevorzugt liegt die Temperatur in Schritt (c) 10 °C oder mehr oberhalb der Härtungstemperatur, bevorzugter 20 °C oder mehr, noch bevorzugter 30 °C oder mehr. Da die Härtungstemperatur mit zunehmender Vernetzungsdichte aufgrund der damit einhergehenden abnehmenden Kettenbeweglichkeit der Harzzusammensetzung ansteigen kann, kann dadurch sichergestellt werden, dass die Härtung möglichst vollständig erfolgen kann, vorausgesetzt, dass die Temperatur für eine ausreichend lange Zeitdauer gehalten wird.

Vorzugsweise wird die Harzzusammensetzung in Schritt (c) ausgehärtet. Durch das Aushärten der Harzzusammensetzung kann die Formstabilität des dreidimensionalen Objekts in den nachfolgenden Schritten des Verfahrens besonders gut erhalten bleiben.

Die zumindest teilweise Wärmehärtung der Harzzusammensetzung in Schritt (c) erfolgt vorzugsweise unter schrittweiser Temperaturerhöhung, wobei die Temperatur bevorzugt in zwei, drei oder mehr Schritten erhöht wird, besonders bevorzugt in drei oder vier Schritten. Dadurch kann der mit zunehmender Vernetzungsdichte abnehmenden Kettenbeweglichkeit entgegengewirkt werden, wodurch eine höhere Vernetzungsdichte erhalten werden kann. Ebenso kann dadurch die Dimensionsstabilität des dreidimensionalen Objekts verbessert werden.

Bei einer schrittweisen Temperaturerhöhung wird die Temperatur vorzugsweise in zumindest einem Schritt für 30 min oder länger gehalten, vorzugsweise für 60 min oder länger. Besonders bevorzugt wird die Temperatur in allen Schritten für 30 min oder länger gehalten. Die Temperaturverteilung im dreidimensionalen Objekt kann sich während dieser Haltezeit bei einer konstanten Temperatur vergleichmäßigen, woraus eine besonders homogene Vernetzungsdichte der Harzzusammensetzung im gesamten dreidimensionalen Objekt resultieren kann.

Bevorzugt erfolgt die zumindest teilweise Wärmehärtung der Harzzusammensetzung in Schritt (c) für 30 bis 40 min bei 70 bis 80 °C, danach für 30 bis 40 min bei 80 bis 90 °C, danach für 60 bis 80 min bei 110 bis 120 °C, und danach für 60 bis 80 min bei 180 bis 190 °C. Dadurch kann eine hohe Vernetzungsdichte erreicht werden, insbesondere kann die Harzzusammensetzung ausgehärtet werden.

Alternativ kann die zumindest teilweise Wärmehärtung der Harzzusammensetzung in Schritt (c) für 60 bis 80 min bei 80 bis 90 °C, danach für 110 bis 130 min bei 110 bis 120 °C, und danach für 60 bis 80 min bei 210 bis 220 °C erfolgen. Mit diesem Temperaturprogramm können insbesondere komplexe Strukturen gut ausgehärtet werden.

Vorzugsweise erfolgt die zumindest teilweise Wärmehärtung der Harzzusammensetzung im dreidimensionalen Objekt in Schritt (c) in einem Salzbad. Das dreidimensionale Objekt kann dann durch das Salzbad gestützt werden, sodass vor allem bei komplexen Strukturen eine unabsichtliche Deformation verhindert werden kann. Alternativ kann auch ein Sand- oder Glasperlenbad verwendet werden, wobei es nicht auf das Material des Bads ankommt, solange dieses geeignet ist, das dreidimensionale Objekt zu stützen, und es anschließend wieder vom dreidimensionalen Objekt abgetrennt werden kann.

In Schritt (d) wird die Harzzusammensetzung im dreidimensionalen Objekt zersetzt, insbesondere pyrolysiert und/oder thermolysiert. Dieser Schritt kann auch als "Entbinderung" bzw. "Entbindern" bezeichnet werden. Eine Thermolyse kann unter Luft erfolgen, d.h. in Gegenwart von Sauerstoff, während eine Pyrolyse unter weitgehendem oder gänzlichem Ausschluss von Sauerstoff erfolgen kann. Vorzugsweise wird die Harzzusammensetzung in Schritt (d) thermolysiert, wenn der Sinterwerkstoff ein Oxid umfasst. Wenn der Sinterwerkstoff ein Carbid und/oder ein Nitrid umfasst, wird die Harzzusammensetzung in Schritt (d) vorzugsweise pyrolysiert. Dann ist jeweils eine effiziente Zersetzung der Harzzusammensetzung möglich.

Um die Harzzusammensetzung zu zersetzen, wird in Schritt (d) eine bestimmte, erhöhte Temperatur vorzugsweise für eine Zeitdauer von 0,5 h oder mehr gehalten, bevorzugter für eine Zeitdauer im Bereich von 1,0 bis 20,0 h, noch bevorzugter von 5,0 bis 15,0 h, beispielsweise 10,0 h. Dadurch kann eine möglichst vollständige Zersetzung der Harzzusammensetzung erreicht werden. Die tatsächliche Zeitdauer kann z.B. in Abhängigkeit der Wanddicke des dreidimensionalen Objekts gewählt werden.

Vorzugsweise liegt die Temperatur in Schritt (d), welche vorzugsweise für die oben angegebene Zeitdauer gehalten wird, bei 300 °C oder darüber, bevorzugter bei 400 °C oder darüber, insbesondere bevorzugt bei 500 °C oder darüber und besonders bevorzugt bei 600°C oder darüber. Dann kann die Harzzusammensetzung möglichst vollständig zersetzt werden. Vorzugsweise liegt die Temperatur in Schritt (d) im Bereich von 600 bis 750 °C. Hieraus kann eine gute Verfahrensökonomie resultieren, insbesondere dann, wenn die Schritte (d) und (e) nicht unmittelbar hintereinander durchgeführt werden. Eine nicht unmittelbar hintereinander erfolgende Durchführung der Schritte (d) und (e) kann bei einem strukturell komplexen dreidimensionalen Objekt vorteilhaft sein, weil die Verfahrensparameter in den beiden Schritte dann unabhängig voneinander gesteuert und besser an das jeweilige dreidimensionale Objekt angepasst werden können.

Bevorzugt werden die Schritte (d) und (e) im selben Prozessraum durchgeführt. Dies hat den Vorteil, dass das Verfahren vereinfacht und effizienter gestaltet werden kann, da das Einstellen einer bestimmten Temperatur für diesen einen Prozessraum ausreichend ist, und die Schritte (d) und (e) dann unmittelbar hintereinander durchgeführt werden können (z.B. in demselben Konvektionsofen). Schon in Schritt (d) kann begonnen werden, den Prozessraum auf eine für Schritt (e) vorgesehene Temperatur aufzuheizen. Vorzugsweise liegt in diesem Fall die Temperatur in Schritt (d) im Bereich von 300 bis 2000 °C, vorzugsweise von 500 bis 1500 °C, bevorzugter von 600 bis 1300 °C und insbesondere bevorzugt von 600 bis 1000 °C. Dadurch kann nicht nur die Zersetzung der Harzzusammensetzung in Schritt (d) rasch erfolgen, sondern auch die Wärmebehandlung in Schritt (e) kann effizienter durchgeführt werden, da der Prozessraum dann bereits zumindest teilweise bis zur für Schritt (e) vorgesehenen Temperatur aufgeheizt ist. Ein weiterer Vorteil der Durchführung der Schritte (d) und (e) im selben Prozessraum ist, dass das Risiko von Deformationen des dreidimensionalen Objekts weiter reduziert werden kann, da das dreidimensionale Objekt zwischen den Schritten (d) und (e) nicht bewegt zu werden braucht und, da die Schritte (d) und (e) unmittelbar hintereinander durchgeführt werden können, auch das Zeitfenster für etwaige Deformationen verringert werden kann.

Es ist auch möglich, die Schritte (c), (d) und (e) im selben Prozessraum durchzuführen, wobei wiederum auf eine schrittweise Temperaturerhöhung zu achten ist, sodass die einzelnen Schritte nacheinander ablaufen können und die Geometrie des dreidimensionalen Objekts erhalten bleiben kann. Dies ist nur möglich, wenn in Schritt (c) kein Salzbad oder dergleichen zur Stabilisierung des dreidimensionalen Objekts erforderlich ist.

In Schritt (e) wird das dreidimensionale Objekt wärmebehandelt. Dadurch können die Formstabilität und die Beständigkeit des dreidimensionalen Objekts erhöht werden. Die Wärmebehandlung kann ein Sintern und/oder ein Brennen umfassen. Unter einem Brennen wird eine Wärmebehandlung verstanden, bei der die Größe des dreidimensionalen Objekts erhalten bleibt. Dementsprechend kann ein gebranntes dreidimensionales Objekt eine vergleichsweise hohe Porosität aufweisen. Unter einem Sintern wird eine Wärmebehandlung verstanden, bei der es durch eine Verdichtung des Sinterwerkstoffs zu einer Schwindung (d.h. Volumenschwindung) des dreidimensionalen Objekts kommt. Ein gesintertes Objekt weist eine geringere Größe auf als vor dem Sintern und kann folglich eine vergleichsweise niedrige Porosität aufweisen. Das Sintern kann sehr gleichmäßig erfolgen, sodass eine hohe Präzision des dreidimensionalen Objekts auch nach Schritt (e) erhalten bleiben kann. Wird ein keramischer Vorläufer als Sinterwerkstoff verwendet, kann durch die Wärmebehandlung ein dreidimensionales, keramisches Objekt mit einer hohen Präzision erhalten werden. Insbesondere bei der Verwendung eines homogenen Ausgangsmaterials kann die Schwindung gut reproduzierbar sein, sodass sie mittels Berechnungen, insbesondere mittels eines CAD-Modells zur Ermittlung eines Schwindungsfaktors oder mehrerer Schwindungsfaktoren, bereits im Vorfeld ermittelt und folglich gut kompensiert werden kann.

Um das dreidimensionale Objekt wärmezubehandeln, wird in Schritt (e) eine bestimmte, erhöhte Temperatur vorzugsweise für eine Zeitdauer von 30 min oder mehr gehalten, bevorzugter für eine Zeitdauer von 60 min oder mehr, noch bevorzugter für eine Zeitdauer im Bereich von 30 bis 180 min. Insbesondere, wenn ein keramischer Vorläufer als Sinterwerkstoff verwendet wird, kann sich eine Keramik im dreidimensionalen Objekt dann durchgängig ausbilden. Die tatsächliche Dauer der Wärmebehandlung kann an den jeweiligen Sinterwerkstoff angepasst werden.

Die Temperatur in Schritt (e), welche vorzugsweise für die oben angegebene Zeitdauer gehalten wird, liegt vorzugsweise im Bereich von 500 bis 2500 °C, bevorzugter von 600 bis 2200 °C, noch bevorzugter von 1000 bis 2000 °C, besonders bevorzugt von 1200 bis 1800 °C. Die Temperatur kann in Abhängigkeit vom jeweiligen Sinterwerkstoff gewählt werden. Wird beispielsweise Aluminiumoxid als Sinterwerkstoff verwendet, liegt die Temperatur in Schritt (e) vorzugsweise im Bereich von 1500 bis 2000 °C. Wird Titandioxid als Sinterwerkstoff verwendet, kann die Temperatur in Schritt (e) im Bereich von 700 bis 1300 °C liegen.

Das Sintern erfolgt vorzugsweise in zwei Stufen, wobei sich Partikel des Sinterwerkstoffs in einer ersten Stufe an ihren Kontaktpunkten verbinden, wodurch Sinterhälse entstehen können; diese Stufe wird auch als "Ansintern" bezeichnet. Dabei kann die Schwindung relativ gering sein. In einer zweiten Stufe können sich die Partikel durch Diffusionsprozesse weiter annähern, wodurch es zu einer vergleichsweise hohen Schwindung kommen kann.

Alternativ kann die Wärmebehandlung in Schritt (e) eine Infiltration umfassen, insbesondere eine Flüssigphaseninfiltration. Dabei wird in das dreidimensionale Objekt flüssiges Material, beispielsweise flüssiges Silicium, infiltriert. Dieses Silicium kann zumindest teilweise mit dem durch die Zersetzung der Harzzusammensetzung verbliebenen Kohlenstoff zu Beta-Siliciumcarbid reagieren. Wird flüssiges Silicium verwendet, umfasst der Sinterwerkstoff vorzugsweise Siliciumcarbid. Somit kann ein homogenes dreidimensionales, keramisches Objekt erhalten werden. Wenn die Wärmebehandlung eine Flüssigphaseninfiltration mit einem flüssigen Material umfasst, kann das flüssige Material Poren des dreidimensionalen Objekts ausfüllen. Dann kommt es bei der Wärmebehandlung zu keiner Schwindung, bzw. nur zu einer vergleichsweise geringen Schwindung, des dreidimensionalen Objekts.

Die Erfindung betrifft weiters die Verwendung des vorhergehend beschriebenen, bei 25 °C festen Ausgangsmaterials in der additiven Fertigung, insbesondere im selektiven Lasersintern (L-PBF), zur Herstellung eines dreidimensionalen Objekts, wobei das Ausgangsmaterial die wärmehärtbare Harzzusammensetzung und den Sinterwerkstoff umfasst, wobei das Ausgangsmaterial den Sinterwerkstoff in einer Menge von 20 Vol% oder mehr, vorzugsweise 25 Vol% oder mehr, umfasst, bezogen auf das Gesamtvolumen des Ausgangsmaterials.

Das durch das erfindungsgemäße Verfahren erhältliche, dreidimensionale Objekt eignet sich aufgrund seiner hohen Präzision gut für den Einsatz in der Medizin-, Automobil- oder Elektronikindustrie, insbesondere als Implantat, Prothese, Wasserfilter, Katalysator oder Isolierung.

Die Erfindung betrifft insbesondere die folgenden Ausführungsformen:
1. Verfahren zur Herstellung eines dreidimensionalen Objekts unter Verwendung von additiver Fertigung, insbesondere selektivem Lasersintern (L-PBF), umfassend die Schritte:
   (a) Bereitstellen eines bei 25 °C festen Ausgangsmaterials umfassend eine wärmehärtbare Harzzusammensetzung und einen Sinterwerkstoff,
   (b) Additive Fertigung des dreidimensionalen Objekts,
   (c) zumindest teilweise Wärmehärtung der Harzzusammensetzung im dreidimensionalen Objekt,
   (d) Zersetzung der Harzzusammensetzung im dreidimensionalen Objekt, und
   (e) Wärmebehandlung des dreidimensionalen Objekts.
2. Verfahren nach Ausführungsform 1, wobei das Ausgangsmaterial in Pulverform ist.
3. Verfahren nach Ausführungsform 1 oder 2, wobei das Ausgangsmaterial eine d₅₀-Partikelgröße von 10 bis 100 µm aufweist, vorzugsweise von 20 bis 60 µm, bevorzugter von 25 bis 50 µm, insbesondere von 30 bis 40 µm.
4. Verfahren nach einer der Ausführungsformen 1 bis 3, wobei das Ausgangsmaterial bei 30 °C fest ist, bevorzugter bei 40 °C, noch bevorzugter bei 50 °C.
5. Verfahren nach einer der Ausführungsformen 1 bis 4, wobei die wärmehärtbare Harzzusammensetzung den Sinterwerkstoff zumindest teilweise umhüllt.
6. Verfahren nach Ausführungsform 5, wobei das in Schritt (a) bereitgestellte Ausgangsmaterial durch eine Coextrusion der wärmehärtbaren Harzzusammensetzung und dem Sinterwerkstoff erhalten wird.
7. Verfahren nach einer der Ausführungsformen 1 bis 6, wobei das Ausgangsmaterial die Harzzusammensetzung in einer Menge von 10 bis 60 Gew% umfasst, vorzugsweise von 20 bis 50 Gew%, bevorzugter von 20 bis 45 Gew%, noch bevorzugter von 25 bis 45 Gew%, bezogen auf das Gesamtgewicht des Ausgangsmaterials.
8. Verfahren nach einer der Ausführungsformen 1 bis 7, wobei die wärmehärtbare Harzzusammensetzung ein Epoxidharz und/oder ein Polyesterharz umfasst.
9. Verfahren nach Ausführungsform 8, wobei die wärmehärtbare Harzzusammensetzung ein Epoxidharz und ein Polyesterharz umfasst, und wobei das Gewichtsverhältnis von Polyesterharz zu Epoxidharz im Bereich von 2,0:1,0 bis 1,0:4,0 liegt, bevorzugt von 1,0:1,0 bis 1,0:2,0, bevorzugter von 1,0:1,0 bis 1,0:1,7, besonders bevorzugt von 1,0:1,1 bis 1,0:1,4.
10. Verfahren nach einer der Ausführungsformen 1 bis 9, wobei ein Harz in der Harzzusammensetzung, insbesondere ein Epoxidharz und/oder ein Polyesterharz, eine durchschnittliche Funktionalität von zwei oder mehr aufweist, vorzugsweise im Bereich von zwei bis vier, bevorzugter von zwei bis drei.
11. Verfahren nach einer der Ausführungsformen 1 bis 10, wobei die wärmehärtbare Harzzusammensetzung eine Härtungstemperatur von 80 °C oder mehr aufweist, vorzugsweise im Bereich von 100 bis 250 °C, bevorzugter von 150 bis 250 °C, besonders bevorzugt von 160 bis 220 °C.
12. Verfahren nach einer der Ausführungsformen 8 bis 11, wobei das Ausgangsmaterial das Polyesterharz in einer Menge von 3 bis 30 Gew% umfasst, bevorzugt von 5 bis 30 Gew%, noch bevorzugter von 10 bis 25 Gew%, besonders bevorzugt von 8 bis 20 Gew%, bezogen auf das Gesamtgewicht des Ausgangsmaterials.
13. Verfahren nach einer der Ausführungsformen 8 bis 12, wobei das Polyesterharz eine Glasübergangstemperatur im Bereich von 50 bis 100 °C aufweist, vorzugsweise von 50 bis 80 °C.
14. Verfahren nach einer der Ausführungsformen 8 bis 13, wobei das Polyesterharz ein aliphatisches Polyesterharz umfasst.
15. Verfahren nach einer der Ausführungsformen 8 bis 14, wobei das Polyesterharz ein carboxyliertes und/oder hydroxyliertes Polyesterharz umfasst.
16. Verfahren nach Ausführungsform 15, wobei das carboxylierte Polyesterharz eine Säurezahl im Bereich von 10 bis 100 mg KOH/g aufweist, vorzugsweise von 20 bis 90 mg KOH/g, bevorzugter von 20 bis 50 mg KOH/g, noch bevorzugter von 25 bis 40 mg KOH/g.
17. Verfahren nach Ausführungsform 15 oder 16, wobei das hydroxylierte Polyesterharz eine Hydroxylzahl im Bereich von 10 bis 300 mg KOH/g aufweist, vorzugsweise von 15 bis 200 mg KOH/g, bevorzugter von 20 bis 100 mg KOH/g.
18. Verfahren nach einer der Ausführungsformen 8 bis 17, wobei das Polyesterharz ein teilkristallines Polyesterharz umfasst.
19. Verfahren nach Ausführungsform 18, wobei die Temperatur in Schritt (b) im Bereich von 50 °C unterhalb und 20 °C oberhalb der Schmelztemperatur des teilkristallinen Polyesterharzes liegt, bevorzugt im Bereich von 40 °C unterhalb und 10 °C oberhalb.
20. Verfahren nach Ausführungsform 18 oder 19, wobei die Schmelztemperatur des teilkristallinen Polyesterharzes im Bereich von 80 bis 150 °C liegt, bevorzugt von 90 bis 130 °C, bevorzugter von 90 bis 120 °C, besonders bevorzugt von 105 bis 120 °C.
21. Verfahren nach einer der Ausführungsformen 18 bis 20, wobei das teilkristalline Polyesterharz eine Schmelztemperatur im Bereich von 105 bis 120 °C und eine Viskosität bei 120 °C von 2,0 Pa s oder darunter aufweist.
22. Verfahren nach einer der Ausführungsformen 18 bis 21, wobei die Harzzusammensetzung ein teilkristallines Polyesterharz und ein amorphes Polyesterharz umfasst, vorzugsweise in einem Verhältnis von teilkristallinem Polyesterharz zu amorphem Polyesterharz im Bereich von 3,0:1,0 bis 1,0:3,0, bevorzugter von 2,0:1,0 bis 1,0:2,0, noch bevorzugter von 1,7:1,0 bis 1,0:1,0, besonders bevorzugt von 1,6:1,0 bis 1,3:1,0.
23. Verfahren nach Ausführungsform 22, wobei die Glasübergangstemperatur des amorphen Polyesterharzes im Bereich von 35 bis 70 °C liegt, vorzugsweise von 45 bis 65 °C, bevorzugter von 50 bis 65 °C.
24. Verfahren nach einer der Ausführungsformen 8 bis 23, wobei das Ausgangsmaterial das Epoxidharz in einer Menge von 5 bis 35 Gew% umfasst, vorzugsweise von 10 bis 30 Gew%, bevorzugter von 15 bis 28 Gew%, besonders bevorzugt von 15 bis 25 Gew%, bezogen auf das Gesamtgewicht des Ausgangsmaterials.
25. Verfahren nach einer der Ausführungsformen 8 bis 24, wobei das Epoxidharz eine Glasübergangstemperatur im Bereich von 60 bis 150 °C aufweist, vorzugsweise von 80 bis 120 °C.
26. Verfahren nach einer der Ausführungsformen 8 bis 25, wobei das Epoxidharz bei 150 °C eine Viskosität im Bereich von 0,1 bis 10 Pa s aufweist, bevorzugt von 0,5 bis 10 Pa s, bevorzugter von 1,0 bis 5,0 Pa s.
27. Verfahren nach einer der Ausführungsformen 8 bis 26, wobei das Epoxidharz ein Epoxid-Äquivalenzgewicht (EEW) von 150 g/eq oder darüber aufweist, vorzugsweise von 350 g/eq oder darüber, bevorzugter im Bereich von 350 bis 1000 g/eq, besonders bevorzugt von 350 bis 700 g/eq.
28. Verfahren nach einer der Ausführungsformen 8 bis 27, wobei das Epoxidharz ein aromatisches Epoxidharz umfasst, wobei das aromatische Epoxidharz vorzugsweise ausgewählt ist aus der Gruppe umfassend ein Bisphenol-basiertes Epoxidharz, ein Novolak-basiertes Epoxidharz, ein Phenol-basiertes Epoxidharz und ein Naphthalin-basiertes Epoxidharz, oder eine Mischung davon, wobei das Bisphenol-basierte Epoxidharz vorzugsweise ein Bisphenol-A-basiertes Epoxidharz umfasst.
29. Verfahren nach einer der Ausführungsformen 8 bis 28, wobei die Harzzusammensetzung ein Epoxidharz oder mehrere Epoxidharze umfasst, wobei zumindest ein Epoxidharz ein Epoxid-Äquivalentgewicht von 350 bis 600 g/eq, vorzugsweise von 400 bis 500 g/eq, und eine Viskosität bei 150 °C von 10,0 Pas oder darunter aufweist.
30. Verfahren nach einer der Ausführungsformen 8 bis 29, wobei die Harzzusammensetzung ein elastomermodifiziertes Epoxidharz umfasst.
31. Verfahren nach Ausführungsform 30, wobei die Harzzusammensetzung weiters ein Epoxidharz und/oder ein Polyesterharz umfasst, vorzugsweise ein Epoxidharz und/oder ein carboxyliertes Polyesterharz.
32. Verfahren nach Ausführungsform 30 oder 31, wobei die Harzzusammensetzung das elastomermodifizierte Epoxidharz in einer Menge von 1 Gew% oder darüber umfasst, vorzugsweise von 5 Gew% oder darüber, noch bevorzugter von 1 bis 10 Gew%, am bevorzugtesten von 5 bis 10 Gew%, bezogen auf das Gesamtgewicht des Ausgangsmaterials; insbesondere, wobei die Harzzusammensetzung ein Epoxidharz und das elastomermodifizierte Epoxidharz umfasst, und wobei die Harzzusammensetzung das elastomermodifizierte Epoxidharz vorzugsweise in einer Menge von 1 bis 50 Gew% umfasst, bevorzugter von 5 bis 50 Gew%, noch bevorzugter von 20 bis 50 Gew%, noch bevorzugter von 30 bis 40 Gew%, bezogen auf den Gesamtgewichtsanteil an Epoxidharz im Ausgangsmaterial.
33. Verfahren nach einer der Ausführungsformen 30 bis 32, wobei das elastomermodifizierte Epoxidharz ein Epoxy-Äquivalentgewicht von 600 g/eq oder darüber aufweist, bevorzugt von 800 g/eq oder darüber, bevorzugter von 900 g/eq oder darüber, noch bevorzugter im Bereich von 900 bis 1500 g/eq, besonders bevorzugt im Bereich von 1200 bis 1500 g/eq.
34. Verfahren nach einer der Ausführungsformen 30 bis 33, wobei die Glasübergangstemperatur des elastomermodifizierten Epoxidharzes bei 60 °C oder darüber liegt, bevorzugt bei 80 °C oder darüber, bevorzugter im Bereich von 80 bis 150 °C, noch bevorzugter von 85 bis 120 °C.
35. Verfahren nach einer der Ausführungsformen 30 bis 34, wobei das elastomermodifizierte Epoxidharz eine durchschnittliche Funktionalität von zwei oder mehr aufweist, bevorzugt von drei oder mehr.
36. Verfahren nach einer der Ausführungsformen 30 bis 35, wobei das elastomermodifizierte Epoxidharz einen Elastomergehalt von 20 bis 60 Gew% aufweist, bevorzugt von 20 bis 50 Gew%, bevorzugter von 25 bis 40 Gew%, bezogen auf das Gewicht des elastomermodifizierten Epoxidharzes.
37. Verfahren nach einer der Ausführungsformen 30 bis 36, wobei das elastomermodifizierte Epoxidharz einen Polyacrylat-Kautschuk (ACM), einen Acrylnitrilbutadien-Kautschuk (NBR) und/oder einen hydrierten Acrylnitrilbutadien-Kautschuk (HNBR) umfasst, besonders bevorzugt einen carboxylierten NBR und/oder HNBR, insbesondere einen carboxyl-terminierten Acrylnitrilbutadien-Kautschuk (CTBN).
38. Verfahren nach einer der Ausführungsformen 1 bis 37, wobei die wärmehärtbare Harzzusammensetzung einen Härter umfasst, wobei der Härter vorzugsweise ausgewählt ist aus der Gruppe umfassend einen Härter enthaltend eine funktionelle Gruppe, einen Initiator und einen Katalysator, oder eine Mischung davon.
39. Verfahren nach Ausführungsform 38, wobei der Härter enthaltend eine funktionelle Gruppe eine durchschnittliche Funktionalität von zwei bis vier aufweist, vorzugsweise von zwei bis drei.
40. Verfahren nach Ausführungsform 38 oder 39, wobei der Härter eine Amingruppe und/oder eine Amidgruppe enthält, bevorzugt zwei oder mehr Amingruppen und/oder zwei oder mehr Amidgruppen.
41. Verfahren nach Ausführungsform 40, wobei der Härter eine Aminzahl im Bereich von 150 bis 240 mg KOH/g aufweist, vorzugsweise von 180 bis 210 mg KOH/g.
42. Verfahren nach einer der Ausführungsformen 38 bis 41, wobei der Härter Dicyandiamid und/oder ein Polyamin umfasst, wobei der Härter vorzugsweise aus Dicyandiamid und/oder dem Polyamin besteht.
43. Verfahren nach einer der Ausführungsformen 38 bis 42, wobei der Katalysator ein ionischer Katalysator ist, vorzugsweise ein kationischer Katalysator.
44. Verfahren nach einer der Ausführungsformen 38 bis 43, wobei das Ausgangsmaterial den Härter in einer Menge von 0,1 Gew% oder mehr umfasst, vorzugsweise von 0,5 Gew% oder mehr, bevorzugter von 0,7 Gew% oder mehr, insbesondere in einer Menge von 0,5 bis 10,0 Gew%, bevorzugter von 0,8 bis 5,5 Gew%, noch bevorzugter von 1,0 bis 4,0 Gew%, noch bevorzugter von 0,8 bis 2,0 Gew%, besonders bevorzugt von 0,8 bis 1,5 Gew%, bezogen auf das Gesamtgewicht des Ausgangsmaterials.
45. Verfahren nach einer der Ausführungsformen 1 bis 44, wobei die wärmehärtbare Harzzusammensetzung ein Epoxidharz und einen Härter für das Epoxidharz umfasst.
46. Verfahren nach einer der Ausführungsformen 1 bis 45, wobei die Harzzusammensetzung mindestens zwei wärmehärtbare Harze und einen Härter umfasst.
47. Verfahren nach einer der Ausführungsformen 1 bis 45, wobei die Harzzusammensetzung mindestens zwei wärmehärtbare Harze und mindestens zwei Härter umfasst.
48. Verfahren nach Ausführungsform 46 oder 47, wobei die zwei wärmehärtbaren Harze mindestens ein Epoxidharz und mindestens ein carboxyliertes Polyesterharz umfassen, wobei zumindest ein Härter vorzugsweise mindestens eine Amingruppe und/oder mindestens eine Amidgruppe enthält, wobei die Amingruppe vorzugsweise eine aliphatische Amingruppe ist und/oder wobei die Amidgruppe vorzugsweise eine Dicyandiamidgruppe ist.
49. Verfahren nach einer der Ausführungsformen 1 bis 48, wobei der Sinterwerkstoff eine Dichte im Bereich von 2,0 bis 16,0 g/cm³ aufweist, vorzugsweise von 2,0 bis 10,0 g/cm³, bevorzugter von 2,5 bis 6,0 g/cm³, besonders bevorzugt von 2,5 bis 4,5 g/cm³.
50. Verfahren nach einer der Ausführungsformen 1 bis 49, wobei das Ausgangsmaterial den Sinterwerkstoff in einer Menge von 20 Vol% oder mehr umfasst, vorzugsweise von 25 Vol% oder mehr, bevorzugter von 30 Vol% oder mehr, noch bevorzugter von 35 Vol% oder mehr, besonders bevorzugt von 40 Vol% oder mehr, bezogen auf das Gesamtvolumen des Ausgangsmaterials.
51. Verfahren nach einer der Ausführungsformen 1 bis 50, wobei das Ausgangsmaterial den Sinterwerkstoff in einer Menge von 40 Gew% oder mehr umfasst, vorzugsweise von 50 Gew% oder mehr, bevorzugter von 55 Gew% oder mehr; bevorzugt im Bereich von 40 bis 95 Gew%, bevorzugter von 50 bis 80 Gew%, noch bevorzugter von 50 bis 75 Gew%, besonders bevorzugt von 53 bis 70 Gew%, bezogen auf das Gesamtgewicht des Ausgangsmaterials.
52. Verfahren nach einer der Ausführungsformen 1 bis 52, wobei der Sinterwerkstoff eine d₅₀-Partikelgröße von 0,02 µm bis 75 µm aufweist, bevorzugter von 0,1 µm bis 50 µm.
53. Verfahren nach einer der Ausführungsformen 1 bis 52, wobei der Sinterwerkstoff ein keramischer Vorläufer ist.
54. Verfahren nach einer der Ausführungsformen 1 bis 53, wobei der Sinterwerkstoff ausgewählt ist aus der Gruppe umfassend Titandioxid, Titancarbid, Tiancarbonitid, Niobcarbid, Magnesiumoxid, Yttriumoxid, Zirkonoxid, Wolframcarbid, Borcarbid, Bornitrid, Siliciumcarbid, Siliciumdioxid, Siliciumnitrid, Aluminiumoxid, Aluminiumhydroxid und Aluminiumnitrid, oder eine Mischung davon; bevorzugter aus der Gruppe umfassend Titandioxid, Zirkonoxid, Siliciumcarbid, Aluminiumhydroxid und Aluminiumoxid, oder eine Mischung davon.
55. Verfahren nach Ausführungsform 54, wobei der Sinterwerkstoff Titandioxid, Aluminiumhydroxid und/oder Aluminiumoxid umfasst; und/oder wobei der Sinterwerkstoff beschichtet und/oder oberflächenmodifiziert ist, vorzugsweise mit Aluminiumoxid, Siliciumdioxid, Zirkonoxid und/oder einem organischen Silan.
56. Verfahren nach einer der Ausführungsformen 1 bis 55, wobei das Ausgangsmaterial ein Additiv umfasst.
57. Verfahren nach Ausführungsform 56, wobei das Additiv ein Entgasungsadditiv umfasst.
58. Verfahren nach Ausführungsform 57, wobei das Ausgangsmaterial das Entgasungsadditiv in einer Menge von 0,1 bis 3 Gew% umfasst, bevorzugter von 0,1 bis 1,0 Gew%, bezogen auf das Gesamtgewicht des Ausgangsmaterials.
59. Verfahren nach Ausführungsform 57 oder 58, wobei das Entgasungsadditiv Benzoin ist.
60. Verfahren nach einer der Ausführungsformen 56 bis 59, wobei das Additiv ein Verlaufsmittel umfasst.
61. Verfahren nach Ausführungsform 60, wobei das Ausgangsmaterial das Verlaufsmittel in einer Menge von 0,5 bis 5,0 Gew% umfasst, bevorzugter von 2,0 bis 3,0 Gew%, bezogen auf das Gesamtgewicht des Ausgangsmaterials.
62. Verfahren nach Ausführungsform 60 oder 61, wobei das Verlaufsmittel eine Kieselsäure und/oder ein Acrylharz umfasst.
63. Verfahren nach einer der Ausführungsformen 60 bis 62, wobei das Ausgangsmaterial ein Schwarzpigment umfasst.
64. Verfahren nach Ausführungsform 63, wobei das Ausgangsmaterial das Schwarzpigment in einer Menge von 0,1 bis 5 Gew% umfasst, bevorzugt von 0,1 bis 3,0 Gew%, bevorzugter von 0,3 bis 1,5 Gew%, bezogen auf das Gesamtgewicht des Ausgangsmaterials.
65. Verfahren nach Ausführungsform 63 oder 64, wobei das Schwarzpigment einen Russ umfasst.
66. Verfahren nach einer der Ausführungsformen 1 bis 65, wobei das Ausgangsmaterial vor Schritt (a) extrudiert wird, vorzugsweise wobei das Ausgangsmaterial nach der Extrusion vermahlen wird; wobei besonders bevorzugt ein erster Teil des Sinterwerkstoffs in einem ersten Extrusionsschritt mit der Harzzusammensetzung extrudiert wird, und nachfolgend ein zweiter Teil des Sinterwerkstoffs in einem zweiten Extrusionsschritt mit der Harzzusammensetzung extrudiert wird, wobei der erste Teil und der zweite Teil des Sinterwerkstoffs vorzugsweise jeweils im Bereich von 10 bis 90 Gew% liegen, bevorzugter von 30 bis 70 Gew%, noch bevorzugter von 40 bis 60 Gew%, bezogen auf das Gesamtgewicht des Sinterwerkstoffs.
67. Verfahren nach einer der Ausführungsformen 1 bis 66, wobei das dreidimensionale Objekt in Schritt (b) unter Verwendung von selektivem Lasersintern (L-PBF) hergestellt wird.
68. Verfahren nach Ausführungsform 67, wobei eine Laserenergiedichte in Schritt (b) im Bereich von 30 bis 290 mJ/mm² liegt, vorzugsweise von 90 bis 240 mJ/mm², bevorzugter von 60 bis 120 mJ/mm².
69. Verfahren nach einer der Ausführungsformen 1 bis 68, wobei die Temperatur in Schritt (b) im Bereich von 40 bis 120 °C liegt, vorzugsweise von 60 bis 100 °C, bevorzugter von 65 bis 90 °C.
70. Verfahren nach einer der Ausführungsformen 1 bis 69, wobei die additive Fertigung des dreidimensionalen Objekts in Schritt (b) unterhalb einer Härtungstemperatur der Harzzusammensetzung erfolgt.
71. Verfahren nach einer der Ausführungsformen 1 bis 69, wobei die additive Fertigung des dreidimensionalen Objekts in Schritt (b) unter zumindest teilweiser Wärmehärtung der Harzzusammensetzung erfolgt.
72. Verfahren nach Ausführungsform 71, wobei zwischen den Schritten (b) und (c) eine nicht zumindest teilweise gehärtete Harzzusammensetzung vom dreidimensionalen Objekt abgetrennt wird, vorzugsweise mittels Druckluft oder durch Sandstrahlen.
73. Verfahren nach einer der Ausführungsformen 1 bis 72, wobei die Temperatur in Schritt (c) bei 100 °C oder darüber liegt, bevorzugter bei 130 °C oder darüber, noch bevorzugter bei 150 °C oder darüber, noch bevorzugter im Bereich von 100 bis 250 °C, noch bevorzugter von 150 bis 220 °C, besonders bevorzugt von 150 bis 200 °C.
74. Verfahren nach einer der Ausführungsformen 1 bis 73, wobei in Schritt (c) eine bestimmte Temperatur für eine Zeitdauer von 2 h oder mehr gehalten wird, bevorzugt für eine Zeitdauer im Bereich von 2 bis 5 h, bevorzugter von 3 bis 4 h.
75. Verfahren nach einer der Ausführungsformen 1 bis 73, wobei die zumindest teilweise Wärmehärtung der Harzzusammensetzung in Schritt (c) unter schrittweiser Temperaturerhöhung erfolgt, wobei die Temperatur in Schritt (c) vorzugsweise in zwei, drei oder mehr Schritten erhöht wird, besonders bevorzugt in drei oder vier Schritten.
76. Verfahren nach Ausführungsform 75, wobei die Temperatur in zumindest einem Schritt für 30 min oder länger gehalten wird, vorzugsweise für 60 min oder länger.
77. Verfahren nach Ausführungsform 75 oder 76, wobei die zumindest teilweise Wärmehärtung der Harzzusammensetzung in Schritt (c) für 30 bis 40 min bei 70 bis 80 °C, danach für 30 bis 40 min bei 80 bis 90 °C, danach für 60 bis 80 min bei 110 bis 120 °C, und danach für 60 bis 80 min bei 180 bis 190 °C erfolgt.
78. Verfahren nach Ausführungsform 75 oder 76, wobei die zumindest teilweise Wärmehärtung der Harzzusammensetzung in Schritt (c) für 60 bis 80 min bei 80 bis 90 °C, danach für 110 bis 130 min bei 110 bis 120 °C, und danach für 60 bis 80 min bei 210 bis 220 °C erfolgt.
79. Verfahren nach einer der Ausführungsformen 1 bis 78, wobei die zumindest teilweise Wärmehärtung der Harzzusammensetzung im dreidimensionalen Objekt in Schritt (b) in einem Salzbad, in einem Sandbad oder in einem Glasperlenbad erfolgt.
80. Verfahren nach einer der Ausführungsformen 1 bis 79, wobei die Temperatur in Schritt (c) 10 °C oder mehr oberhalb der Härtungstemperatur liegt, bevorzugter 20 °C oder mehr, noch bevorzugter 30 °C oder mehr.
81. Verfahren nach einer der Ausführungsformen 1 bis 80, wobei die Harzzusammensetzung in Schritt (c) ausgehärtet wird.
82. Verfahren nach einer der Ausführungsformen 1 bis 81, wobei die Harzzusammensetzung im dreidimensionalen Objekt in Schritt (d) pyrolysiert wird.
83. Verfahren nach einer der Ausführungsformen 1 bis 82, wobei eine bestimmte Temperatur in Schritt (d) für eine Zeitdauer von 0,5 h oder mehr gehalten wird, bevorzugter für eine Zeitdauer im Bereich von 1,0 bis 20,0 h, noch bevorzugter von 5,0 bis 15,0 h.
84. Verfahren nach einer der Ausführungsformen 1 bis 83, wobei die Temperatur in Schritt (d) bei 300 °C oder darüber liegt, vorzugsweise bei 400 °C oder darüber, bevorzugter bei 500 °C oder darüber, noch bevorzugter bei 600 °C oder darüber; besonders bevorzugt im Bereich von 600 bis 750 °C.
85. Verfahren nach einer der Ausführungsformen 1 bis 83, wobei die Schritte (d) und (e) im selben Prozessraum durchgeführt werden, vorzugsweise wobei die Schritte (c), (d) und (e) im selben Prozessraum durchgeführt werden.
86. Verfahren nach Ausführungsform 85, wobei die Temperatur in Schritt (d) im Bereich von 300 bis 2000 °C liegt, vorzugsweise von 500 bis 1500 °C, bevorzugter von 600 bis 1300 °C, noch bevorzugter von 600 bis 1000 °C.
87. Verfahren nach einer der Ausführungsformen 1 bis 86, wobei die Wärmbehandlung des dreidimensionalen Objekts in Schritt (e) ein Sintern und/oder ein Brennen umfasst, vorzugsweise ein Sintern.
88. Verfahren nach einer der Ausführungsformen 1 bis 87, wobei eine bestimmte Temperatur in Schritt (e) für eine Zeitdauer von 30 min oder mehr gehalten wird, bevorzugt für eine Zeitdauer von 60 min oder mehr, bevorzugter für eine Zeitdauer im Bereich von 30 min bis 180 min.
89. Verfahren nach einer der Ausführungsformen 1 bis 88, wobei die Temperatur in Schritt (e) im Bereich von 500 bis 2500 °C liegt, vorzugsweise von 600 bis 2200 °C, bevorzugter von 1000 bis 2000 °C, noch bevorzugter von 1200 bis 1800 °C.
90. Verwendung eines bei 25 °C festen Ausgangsmaterials in der additiven Fertigung, insbesondere im selektiven Lasersintern (L-PBF), zur Herstellung eines dreidimensionalen Objekts, wobei das Ausgangsmaterial eine wärmehärtbare Harzzusammensetzung und einen Sinterwerkstoff umfasst, wobei das Ausgangsmaterial den Sinterwerkstoff in einer Menge von 20 Vol% oder mehr, vorzugsweise 25 Vol% oder mehr, umfasst, bezogen auf das Gesamtvolumen des Ausgangsmaterials.
91. Verwendung nach Ausführungsform 90, wobei das Ausgangsmaterial den Sinterwerkstoff in einer Menge von 30 Vol% oder mehr umfasst, vorzugsweise 35 Vol% oder mehr, noch bevorzugter von 40 Vol% oder mehr, bezogen auf das Gesamtvolumen des Ausgangsmaterials.
92. Verwendung nach Ausführungsform 90 oder 91, wobei der Sinterwerkstoff ausgewählt ist aus der Gruppe umfassend Titandioxid, Zirkonoxid, Siliciumcarbid, Aluminiumoxid, Aluminiumhydroxid und Mischungen davon.
93. Verwendung nach einer der Ausführungsformen 90 bis 92, wobei die Harzzusammensetzung mindestens zwei wärmehärtbare Harze und mindestens einen Härter umfasst.
94. Verwendung nach einer der Ausführungsformen 90 bis 93, wobei das Ausgangsmaterial ein Schwarzpigment umfasst.
95. Verwendung nach einer der Ausführungsformen 90 bis 94, wobei das Ausgangsmaterial ein Merkmal oder mehrere Merkmale der Ausführungsformen 2 bis 89 aufweist.

### Definitionen

**[Additive Fertigung]** Unter diesem Begriff wird ein Prozess verstanden, der durch Verbinden von Material ein dreidimensionales Objekt aus 3D-Modelldaten, im Gegensatz zu subtraktiven und umformenden Fertigungsmethoden, Schicht für Schicht herstellt (DIN EN ISO / ASTM 52900:2022-03).

**[Aminzahl]** Die Aminzahl ist definiert als die Menge an Kaliumhydroxid (KOH) in mg, die dem Aminanteil von 1 g einer chemischen Substanz, die freie Amingruppen enthält, gleichgesetzt ist. Die Aminzahl eines Bestandteils des Ausgangsmaterials (z.B. die Aminzahl eines Härters) kann nach der Norm DIN EN ISO 9702:1998 bestimmt werden. Wird z.B. eine Mischung aus zwei oder mehr Härtern mit Amingruppen verwendet, ist die angegebene Aminzahl der Mittelwert der Mischung.

**[Ausgangsmaterial]** Dieser Begriff bezeichnet ein Massenrohmaterial, das für den Aufbauprozess in der additiven Fertigung verwendet werden kann. Darunter fallen Ausgangsmaterialien in unterschiedlichen Formen, z.B. Flüssigkeiten, Pulver, Suspensionen, Filamente oder Folien (DIN EN ISO / ASTM 52900:2022-03).

**[Epoxidharz]** Unter diesem Begriff wird ein Monomer, ein Oligomer oder ein Polymer verstanden, das eine oder mehrere Epoxidgruppe(n) enthält. Die Begriffe Epoxid und Epoxidharz können synonym verwendet werden. In der vorliegenden Beschreibung kann das Epoxidharz ein Monomer, ein Oligomer, ein Polymer oder eine Mischung davon sein. Wenn nicht ausdrücklich anders angegeben, kann der Begriff "Epoxidharz" in seiner Einzahl ein oder mehrere Epoxidharz(e) umfassen.

**[Funktionalität, durchschnittliche]** Unter der durchschnittlichen Funktionalität eines Harzes oder eines Härters wird die durchschnittliche Anzahl funktioneller Gruppen pro Molekül des Harzes bzw. Härters verstanden, welche funktionellen Gruppen mit anderen funktionellen Gruppen, z.B. eines Harzes oder Härters, unter entsprechenden Bedingungen reagieren können, z.B. unter Zufuhr von thermischer Energie.

**[Glasübergangstemperatur]** Die Glasübergangstemperatur (Tg) ist kennzeichnend für den Temperaturbereich, in welchem ein Polymer vom energieelastischen (d.h. glasartigen) Zustand in den entropieelastischen (d.h. gummiartigen) Zustand übergeht. In dieser Beschreibung wird der Wendepunkt der endothermen Stufe, die den Glasübergang anzeigt, als Tg bezeichnet. Dabei werden nur endotherme Stufen oberhalb von 0 °C als Tg herangezogen. Die Tg kann gemäß der Norm ISO 11357-2:2014 mittels einer DSC-Messung ermittelt werden. Die DSC-Messung kann unter Stickstoff durchgeführt werden. Eine Heiz- und Kühlrate von 20 K/min und ein Probengewicht von 10 bis 15 mg können verwendet werden. In einem ersten Aufheizvorgang kann die thermische Vorgeschichte eliminiert werden, die Bestimmung der Tg kann dann aus einer zweiten Aufheizkurve erfolgen. DSC-Messungen können insbesondere mit dem Temperaturprogramm gemäß der Tabelle 3 dieser Beschreibung erfolgen. Die Schritte 1-6 dieses Temperaturprogramms können durchgeführt werden, um die Tg einer ungehärteten, zumindest teilweise gehärteten oder ausgehärteten Harzzusammensetzung, oder die Tg einer einzelnen Komponente (z.B. eines Harzes oder Härters) zu bestimmen. Die Schritte 1-10 des Temperaturprogramms können durchgeführt werden, um aus der Aufheizkurve des Schritts 9 eine Tg der Harzzusammensetzung zu bestimmen, welche mit der Tg einer zumindest teilweise wärmegehärteten Harzzusammensetzung im dreidimensionalen Objekt verglichen werden kann. Die Schritte 11-13 können durchgeführt werden, um zu bestätigen, dass die zuvor erfolgte Aushärtung vollständig war.

**[Härter]** Der Begriff Härter (auch "Vernetzer" genannt) ist als ein Bestandteil des Ausgangsmaterials zu verstehen, der mit einem wärmehärtbaren Harz reagieren bzw. eine chemische Reaktion des Harzes initiieren bzw. beschleunigen kann, um ein dreidimensionales Netzwerk (d.h. ein Duromer) zu bilden.

**[Härtung]** Unter diesem Begriff (auch als "Härten" oder "Vernetzen" bezeichnet) wird die Behandlung einer wärmehärtenden Harzzusammensetzung mit Energie (z.B. Wärmeenergie oder Strahlung) verstanden, sodass härtbare Bestandteile der Harzzusammensetzung (z.B. Harze mit funktionellen, härtbaren Gruppen) zu einer Reaktion angeregt werden und die Harzzusammensetzung in einen zumindest teilweise gehärteten Zustand gebracht wird. Die Harzzusammensetzung kann auch nicht nur teilweise gehärtet, sondern ausgehärtet werden. Das bedeutet, dass in einer Heizkurve einer nachfolgenden DSC-Messung dann kein Härtungspeak mehr ersichtlich ist, und dass der Unterschied der Glasübergangstemperatur der Harzzusammensetzung in zwei aufeinanderfolgenden Heizkurven vorzugsweise weniger als 4 °C ist, bevorzugter weniger als 2 °C.

**[Härtungstemperatur]** Die Härtungstemperatur ist definiert als die Temperatur, ab welcher eine Härtung der wärmehärtbaren Harzzusammensetzung erfolgen kann. Die Härtungstemperatur hängt unter anderem davon ab, welches Harz und ggf. welchen Härter das Ausgangsmaterial umfasst. Die Härtungstemperatur der Harzzusammensetzung kann durch eine DSC-Messung ermittelt werden, insbesondere gemäß der Norm ISO 11357-2:2014. Die Messung kann unter Stickstoff durchgeführt werden. Eine Heiz- und Kühlrate von 20 K/min und ein Probengewicht von 10 bis 15 mg können verwendet werden. Der Onset des Härtungspeaks der Harzzusammensetzung in der ersten Aufheizkurve kennzeichnet den Beginn der Härtung und wird als die Härtungstemperatur angesehen.

**[Harzzusammensetzung, wärmehärtbar]** Unter diesem Begriff wird eine Harzzusammensetzung verstanden, die ein wärmehärtbares Harz (d.h. ein Monomer, ein Oligomer und/oder ein Polymer mit zumindest einer funktionellen, wärmehärtbaren Gruppe) umfasst, das mit einer anderen funktionellen Gruppe (z.B. eines Härters) unter Zufuhr von thermischer Energie reagieren kann, sodass ein dreidimensionales Netzwerk (d.h. ein Duromer) gebildet werden kann.

**[Hydroxylzahl]** Die Hydroxylzahl ist definiert als die Menge an Kaliumhydroxid (KOH) in mg, die erforderlich ist, um die Menge an Essigsäure zu neutralisieren, die bei der Acetylierung von 1 g einer chemischen Substanz, die freie Hydroxylgruppen enthält, aufgenommen wurde. Die Hydroxylzahl von Bestandteilen des Ausgangsmaterials (z.B. die Hydroxylzahl eines hydroxylierten Polyesterharzes) kann nach der Norm DIN EN ISO 4629-2:2016-07 bestimmt werden. Wird z.B. eine Mischung aus zwei oder mehr hydroxylierten Polyesterharzen verwendet, ist die angegebene Hydroxylzahl der Mittelwert der Mischung.

**[Homogenität]** Der Begriff Homogenität bezieht sich darauf, dass die Bestandteile eines Ausgangsmaterial, z.B. ein wärmehärtbares Harz und ein Härter, in einem gut dispergierten Zustand mit einer zufälligen Verteilung vorliegen.

**[Polyesterharz]** Unter diesem Begriff wird ein Oligomer oder ein Polymer verstanden, das mindestens zwei Estergruppen in seinem Grundgerüst aufweist. Ein Polyesterharz kann z.B. durch eine Polykondensationsreaktion eines di-, tri- oder polyfunktionellen, carboxylierten Monomers und eines di-, tri- oder polyfunktionellen, hydroxyfunktionellen Monomers synthetisiert werden. Die Begriffe Polyester, Polyesterharz und Polyesterpolymer können synonym verwendet werden. In der vorliegenden Beschreibung kann das Polyesterharz ein Oligomer, ein Polymer oder eine Mischung davon sein. Wenn nicht ausdrücklich anders angegeben, kann der Begriff "Polyesterharz" in seiner Einzahl ein oder mehrere Polyesterharz(e) umfassen.

**[Polymer, amorph]** Unter einem amorphen Polymer wird ein nicht kristallisationsfähiges Polymer verstanden. Ein Polymer ist dann amorph, wenn es nach Eliminierung seiner thermischen Vorgeschichte keinen erkennbaren Kristallisationspeak bzw. Schmelzpeak aufweist, was mittels einer DSC-Messung bestimmt werden kann.

**[Polymer, teilkristallin]** Unter einem teilkristallinen Polymer wird ein Polymer verstanden, das in seinem festen Zustand sowohl amorphe als auch kristalline Domänen aufweist. Ein Polymer ist dann teilkristallin, wenn es nach Eliminierung seiner thermischen Vorgeschichte einen Kristallisationspeak bzw. Schmelzpeak aufweist, was mittels einer DSC-Messung bestimmt werden kann.

**[Säurezahl]** Die Säurezahl ist definiert als die Menge an Kaliumhydroxid (KOH) in mg, die erforderlich ist, um Säuregruppen einer chemischen Substanz zu neutralisieren. Die Säurezahl von Bestandteilen des Ausgangsmaterials (z.B. die Säurezahl eines carboxylierten Polyesterharzes) kann nach der Norm DIN EN ISO 2114:2002-06 bestimmt werden. Wird z.B. eine Mischung aus zwei oder mehr carboxylierten Polyesterharzen verwendet, ist die angegebene Säurezahl der Mittelwert der Mischung.

**[Schmelztemperatur]** Die Schmelztemperatur (Tm) einer chemischen Substanz ist die Temperatur, bei der sich ihr Zustand von fest zu flüssig ändert. Da teilkristalline Polymere einen Schmelzbereich haben, ist die Tm eines teilkristallinen Polymers die Temperatur des endothermen Schmelzpeaks der kristallinen Domänen des Polymers. Die Tm kann mittels einer DSC-Messung gemäß der Norm ISO 11357-3:2018 ermittelt werden. Die Messung kann unter Stickstoff durchgeführt werden. Eine Heiz- und Kühlrate von 20 K/min und ein Probengewicht von 10 bis 15 mg können verwendet werden. In einem ersten Aufheizvorgang kann die thermische Vorgeschichte eliminiert werden, die Bestimmung der Tm kann dann aus einer zweiten Aufheizkurve erfolgen. Die DSC-Messung kann insbesondere mit dem Temperaturprogramm gemäß der Tabelle 3 dieser Beschreibung durchgeführt werden, wobei die Tm aus der Aufheizkurve des Schritts 5 bestimmt werden kann.

**[Viskosität]** Die dynamische Viskosität von Harzen, beispielsweise Epoxidharzen oder Polyesterharzen, kann mittels eines Kegel-Platte Viskosimeters (Brookfield CAP 2000+ von Brookfield Ametek, US), ausgestattet mit einer Spindel-06 (CAP-S-06) gemessen werden. Abhängig von der erwarteten dynamischen Viskosität der Probe des Harzes können auch andere Spindeln verwendet werden (z.B. Spindel 02 für eine erwartete dynamische Viskosität von weniger als 0,5 Pa s bei 150 °C). Die Platte des Viskosimeters kann auf 150 °C (oder eine andere gewünschte Messtemperatur) vorgeheizt werden, und eine ausreichende Probenmenge kann darauf appliziert werden (ca. 0,1 g Probe bei Verwendung von Spindel 06). Die Probe kann danach bei der gewünschten Temperatur, z.B. bei 150 °C, gehalten werden, und die Messung bei einer Umdrehungsgeschwindigkeit von 700 Umdrehungen pro Minute für eine Zeitdauer von 115 Sekunden kann gestartet werden. Die dynamische Viskosität bei 150 °C kann dann am Display des Geräts abgelesen werden. Zusätzliche Informationen können der Bedienungsanleitung des Geräts entnommen werden (Manual no. M02-313-I0916; abrufbar unter https://www.brookfieldengineering.com/- /media/ametekbrookfield/manuals/lab°/20viscometers/cap2000°/20instructions.pdf?la=en).
Die Viskosität des Ausgangsmaterials kann nach ISO 6721-10:2015 bestimmt werden. Die Messung kann beispielsweise mit dem Platten-Rheometer AR2000ex von TA Instruments (US) durchgeführt werden.

### Figuren

Fig. 1-3 zeigen DSC-Kurven von Ausgangsmaterialien gemäß Beispiel 1 (Fig. 1), Beispiel 2 (Fig. 2) und Beispiel 3 (Fig. 3). Dargestellt sind jeweils eine erste, eine zweite und eine dritte Aufheizkurve (benannt mit den Endungen "_1", "_2" und "_3").
Fig. 4 zeigt DSC-Kurven von Proben wärmegehärteter, dreidimensionaler Objekte, die aus den Ausgangsmaterialien gemäß den Beispielen 1-3 hergestellt wurden. Dargestellt ist jeweils eine erste Aufheizkurve.
Fig. 5-7 zeigen TGA-Kurven von Proben wärmegehärteter, dreidimensionaler Objekte, die aus den Ausgangsmaterialien gemäß Beispiel 1 (Fig. 1), Beispiel 2 (Fig. 6) und Beispiel 3 (Fig. 7) hergestellt wurden.
Fig. 8 zeigt Aufnahmen eines dreidimensionales Objekts, das aus dem Ausgangsmaterial gemäß Beispiel 1 hergestellt wurde, nach den Schritten (b), (c) und (e) des Verfahrens.
Fig. 9-10 zeigen REM-Aufnahmen gesinterter, dreidimensionaler Objekte, die aus den Ausgangsmaterialien gemäß Beispiel 1 (Fig. 9) und Beispiel 2 (Fig. 10) hergestellt wurden.
Fig. 11 zeigt Aufnahmen dreidimensionaler Objekte, die aus den Ausgangsmaterialien gemäß Beispiel 2 und Beispiel 3 hergestellt wurden, nach Schritt (b) des Verfahrens.

### Beispiele

Die Erfindung wird nachstehend anhand von Beispielen weiter erläutert, auf welche die Erfindung nicht beschränkt sein soll.

### (I) Herstellung von Ausgangsmaterialien

Die Ausgangsmaterialien gemäß Tabelle 1 wurden hergestellt, wobei das Ausgangsmaterial gemäß Beispiel 1 Titandioxid in einer Menge von 25,8 Vol% (entspricht 54,6 Gew%) enthielt, und das Ausgangsmaterial gemäß Beispielen 2 und 3 Aluminiumhydroxid (ATH) in einer Menge von 37,6 Vol% bzw. 37,7 Vol% (entspricht 55,0 Gew% bzw. 55,1 Gew%). Zunächst wurden die Komponenten vorgemischt und danach mit einem Doppelschneckenextruder (ZSK-18, Coperion, Deutschland) extrudiert. Bei Beispiel 3 wurden 50 Gew% der vorgesehenen ATH-Menge der Harzzusammensetzung in einem ersten Extrusionsschritt zugegeben, und die restliche Menge des ATH (50 Gew%) wurde in einem weiteren Extrusionsschritt zugegeben.

Für alle Beispiele wurde eine Drehzahl von 600 bis 1200 UpM, eine Temperatur im Eintrittsbereich des Extruders von 40 °C und eine Temperatur im Austrittsbereich des Extruders von 80 °C verwendet; für Beispiel 3 wurden diese Parameter für beide Extrusionsschritte gewählt. Die Extrudate wurden anschließend gekühlt, grob gebrochen und anschließend mit einer Mühle (ICM 158 CX, Neuman & Esser, Deutschland) mit einem Luftstrom von 2,4 m³/min zu einem Pulver vermahlen, bis eine d₅₀-Partikelgröße von 100 µm oder darunter erreicht war. Im Falle von Beispiel 1 wurde eine d₅₀-Partikelgröße von 39 µm erhalten, für Beispiel 2 lag die d₅₀-Partikelgröße bei 36 µm und für Beispiel 3 bei 32 µm. Die erhaltenen Ausgangsmaterialien wurden nachfolgend für das erfindungsgemäße Verfahren verwendet.

**Tabelle 1: Zusammensetzungen erfindungsgemäßer Ausgangsmaterialien (Mengenangaben in Gew%)**

| **Handelsname** | **Hersteller** | **Beschreibung** | **Beispiel 1** | **Beispiel 2** | **Beispiel 3** |
|---|---|---|---|---|---|
| Portafill A40 | Sibelco Europe | Sinterwerkstoff; synthetisches Aluminiumhydroxid (ATH) | | 55,0 | 55,1 |
| Tioxide TR81 | Huntsman | Sinterwerkstoff; Titandioxid (Rutil), beschichtet mit Zirkon | 27,0 | | |
| Kronos 3025 | Kronos | Sinterwerkstoff; Titandioxid (Rutil), grob, ohne Pigmentierung | 27,6 | | |
| Uralac P5127 | Covestro | Polyesterharz | 10,0 | 8,6 | |
| Sirales PE5900 | SIR Industriale | Teilkristallines Polyesterharz | 6,5 | 10,0 | 9,0 |
| D.E.R. 6510-HT | Olin Epoxy | Novolak-modifiziertes Epoxidharz | 9,3 | 8,0 | |
| Hypox RK84L | Huntsman | Elastomermodifiziertes Epoxidharz | 8,0 | 8,0 | |
| Epiclon HP-4710 | DIC Corporation | Naphthalin-modifiziertes Epoxidharz | | 5,2 | |
| Epokukdo KD-2011 | Kukdo Chemical | Epoxidharz | 6,0 | | 31,7 |
| Aradur 835CH | Huntsman | Härter; aliphatisches Polyamin | 1,5 | 1,5 | |
| Dyhard 100S | AlzChem | Härter; Dicyandiamid | 0,6 | 0,6 | 1,1 |
| Resiflow PL200 | Worlée-Chemie | Additiv; Verlaufsmittel; Acrylcopolymer und Kieselsäure | 1,0 | 1,0 | 1,0 |
| Modaflow Pulver 6000 | Allnex | Additiv; Verlaufsmittel; Acrylcopolymer und Kieselsäure | 1,0 | 1,0 | 1,0 |
| Benzoin | Harke Chemicals | Additiv; Verlaufsmittel und Entgasungsmittel | 0,5 | 0,5 | 0,5 |
| Printex Beads 60A | Orion Engineered Carbons | Additiv; Absorber; Schwarzpigment | 1,0 | 0,6 | 0,6 |
| Summe (Gew%) | | | 100,0 | 100,0 | 100,0 |

### (II) Herstellung von wärmehärtbaren, dreidimensionalen Objekten

Die pulverförmigen Ausgangsmaterialien gemäß den Beispielen 1, 2 und 3 wurden zur additiven Fertigung mittels L-PBF verwendet. Für den Druckprozess wurde der Drucker ProMaker P1000 (Prodways, Frankreich) bzw. der Drucker HT252P (Farsoon Europe, Deutschland) eingesetzt. Das jeweilige Ausgangsmaterial wurde schichtweise auf eine Bauplattform des Druckers in einer Dicke von 100 µm glatt aufgetragen. Durch selektives Bestrahlen der glatten Pulveroberfläche mit einem Kohlenstoffdioxid-Laser mit einer Wellenlänge von 10,6 µm bei einer Laserleistung von 16 W (ProMaker P1000) bzw. 31 W (HT252P), einer Scan-Geschwindigkeit von 3,5 m/s (ProMaker P1000) bzw. 7,6 m/s (HT252P) und einem Abstand der Scanlinien von 0,15 mm (ProMaker P1000) bzw. 0,13 mm (HT252P) wurde das dreidimensionale Objekt aufgebaut. Die resultierende eingetragene Laserenergiedichte lag bei beiden Druckvarianten auf einem ähnlichen Niveau, und zwar bei 91,4 mJ/mm² (ProMaker P1000) bzw. 108,3 mJ/mm² (HT252P). Die Temperatur auf der Bauplattform, die sogenannte Pulverbetttemperatur, lag für die Beispiele 1 und 3 bei 72 °C und für Beispiel 2 bei 66 °C. Zugstäbe mit der Prüfkörperform, beschrieben in DIN EN ISO 3167 mit einer Gesamtlänge von 150 mm, einer maximalen Breite von 20 mm sowie einer Dicke von 4 mm für die Prüfung nach DIN EN ISO 527-1:2019 wurden gedruckt. Zusätzlich wurden Würfel mit einer Kantenlänge von 12 mm gedruckt. Nach dem Druck wurde überschüssiges Ausgangsmaterial mit Bürsten, Druckluft und Sandstrahlen entfernt.

### (III) Wärmehärtung der dreidimensionalen Objekte

Die unter Verwendung der Ausgangsmaterialien gemäß den Beispielen 1, 2 und 3 gedruckten, dreidimensionalen Objekte wurden in einem Konvektionsofen (Carbolite PF200, Carbolite Gero, Deutschland) mit dem Temperaturprogramm gemäß Tabelle 2 wärmegehärtet und danach im Konvektionsofen auf ca. 120 °C und danach an Raumluft auf Raumtemperatur (ca. 25 °C) abgekühlt. Dabei wurden die Harzzusammensetzungen in den jeweiligen dreidimensionalen Objekten vollständig ausgehärtet.

Das temperaturabhängige Härtungsverhalten der Harzzusammensetzungen wurde mittels DSC bestimmt. Für die DSC-Messungen wurden Proben der Ausgangsmaterialien sowie Proben der gedruckten und wärmegehärteten Zugstäbe der Beispiele 1, 2 und 3 mit einer Masse im Bereich von 10 bis 15 mg dem in Tabelle 3 angegebenen Temperaturprogramm unterzogen. Die DSC-Messungen wurden gemäß der Norm ISO 11357-2:2014 mit der DSC 204 F1 Phoenix (Netzsch, Deutschland) unter Stickstoffatmosphäre durchgeführt.

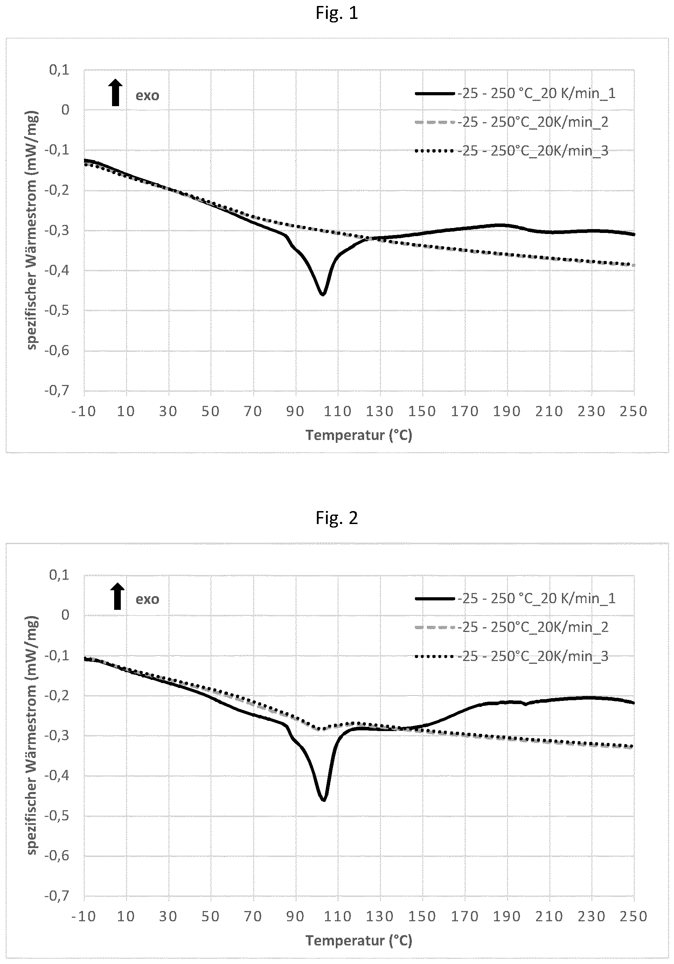

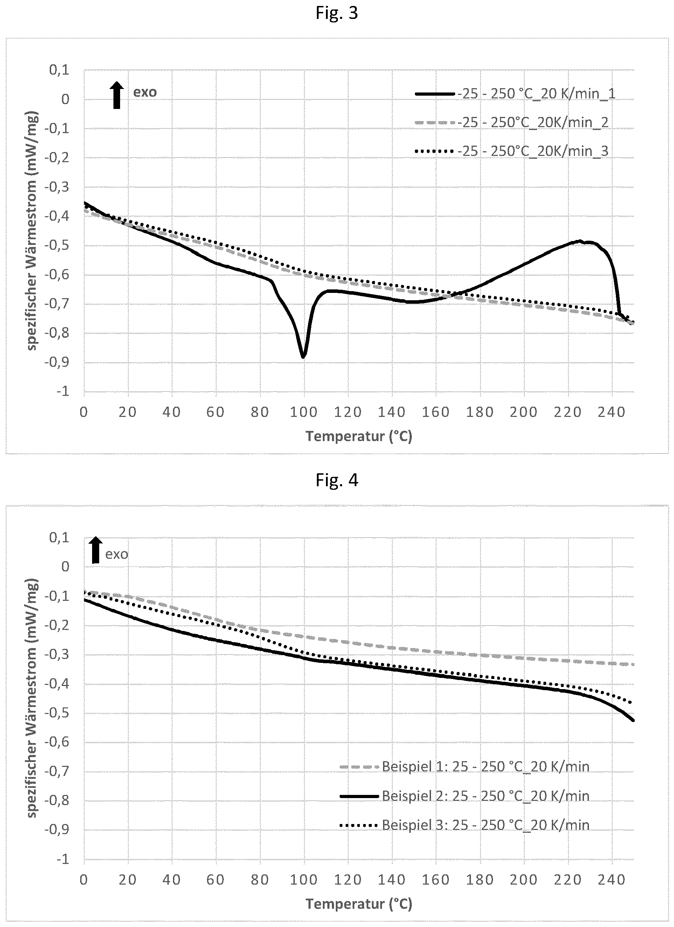

Aus der ersten Aufheizkurve der Ausgangsmaterialien bis 250 °C (Schritt 5 der Tabelle 3) ist ein exothermer Härtungspeak mit einem Onset bei ca. 130 °C (Beispiel 1, siehe Fig. 1), bei ca. 140 °C (Beispiel 2, siehe Fig. 2) bzw. bei ca. 160 °C (Beispiel 3, siehe Fig. 3) ersichtlich; in der zweiten Aufheizkurve bis 250 °C (Schritt 9 der Tabelle 3) ist kein exothermer Peak mehr vorhanden. Die dritte Aufheizkurve entspricht im Wesentlichen der zweiten Aufheizkurve, demnach wurde die Harzzusammensetzung bereits vor dem zweiten Aufheizvorgang vollständig ausgehärtet (siehe Fig. 1-3).

Aufheizkurven der Proben der wärmegehärteten, dreidimensionalen Objekte bestätigen, dass die Aushärtung der Harzzusammensetzung bei der Wärmehärtung dieser Objekte vollständig war: Wie aus Fig. 4 ersichtlich ist, weisen bereits die ersten Aufheizkurven aller Proben (basierend auf den Ausgangsmaterialien der Beispiele 1-3) keine exothermen Peaks auf; hierbei wurde gemäß Schritt 5 der Tabelle 3 bis 250 °C aufgeheizt. Die Messungen wurden deshalb bereits nach Schritt 6 beendet.

**Tabelle 2: Temperaturprogramm zur Wärmehärtung der Harzzusammensetzung**

| **Schritt Nr.** | **Modus** | **Temperatur (°C)** | **Heiz-/Kühlrate (K/min)** | **Zeit (hh:mm)** |
|---|---|---|---|---|
| 0 | Start | 25 | | |
| 1 | Dynamisch | 100 | 1 | 00:75 |
| 2 | Isotherm | 100 | | 00:30 |
| 3 | Dynamisch | 150 | 1 | 00:50 |
| 4 | Isotherm | 150 | | 00:15 |
| 5 | Dynamisch | 200 | 1 | 00:50 |
| 6 | Isotherm | 200 | | 00:15 |

**Tabelle 3: Temperaturprogramm der DSC-Messungen**

| **Schritt Nr.** | **Modus** | **Temperatur (°C)** | **Heizrate bzw. Kühlrate (K/min)** | **Zeit (hh:mm)** |
|---|---|---|---|---|
| 0 | Start | 25 | | |
| 1 | Dynamisch | 80 | 20 | 00:03 |
| 2 | Isotherm | 80 | | 00:01 |
| 3 | Dynamisch | -25 | 20 | 00:05 |
| 4 | Isotherm | -25 | | 00:02 |
| 5 | Dynamisch | 250 | 20 | 00:14 |
| 6 | Isotherm | 250 | | 00:20 |
| 7 | Dynamisch | -25 | 20 | 00:14 |
| 8 | Isotherm | -25 | | 00:02 |
| 9 | Dynamisch | 250 | 20 | 00:14 |
| 10 | Isotherm | 250 | | 00:20 |
| 11 | Dynamisch | -25 | 20 | 00:14 |
| 12 | Isotherm | -25 | | 00:02 |
| 13 | Dynamisch | 250 | 20 | 00:14 |

### (IV) Mechanische Charakterisierung der dreidimensionalen Objekte vor und nach der Wärmehärtung

Die mechanische Charakterisierung der dreidimensionalen Objekte vor und nach der Wärmehärtung wurde mittels einer Zugprüfmaschine (Shimadzu AGS-10kN XD Series, Shimadzu, Deutschland) nach der Norm DIN EN ISO 527-1:2019 durchgeführt. Dabei wurden eine Einspannlänge von 125 mm und eine Zuggeschwindigkeit von 1 mm/min verwendet. Die Ergebnisse der Zugprüfung sind in Tabelle 4 angeführt.

**Tabelle 4: Mechanische Eigenschaften der dreidimensionalen Objekte vor und nach der Wärmehärtung**

| **Beispiel Nr.** | **Zustand** | **E-Modul (GPa)** | **Zugfestigkeit (MPa)** | **Bruchdehnung (%)** |
|---|---|---|---|---|
| 1 | ungehärtet | 0,48 | 3,61 | 0,53 |
| 1 | gehärtet | 1,87 | 19,45 | 1,84 |
| 2 | ungehärtet | 0,39 | 3,89 | 0,40 |
| 2 | gehärtet | 0,56 | 6,81 | 2,88 |
| 3 | ungehärtet | 1,09 | 7,26 | 0,60 |
| 3 | gehärtet | 3,79 | 37,46 | 1,55 |

Im Vergleich der Ergebnisse der Tabelle 4 zeigen sich deutlich die Auswirkung der Wärmehärtung der Harzzusammensetzungen auf die mechanischen Eigenschaften des dreidimensionalen Objekts. Diese können durch Ausbildung eines dreidimensionalen Netzwerks wesentlich gesteigert werden. Die Steigerung der mechanischen Eigenschaften wirkt sich bis zur und auch während der Zersetzung der Harzzusammensetzung positiv auf die Stabilität des dreidimensionalen Objekts aus.

### (V) Zersetzung der Harzzusammensetzung im dreidimensionalen Objekt

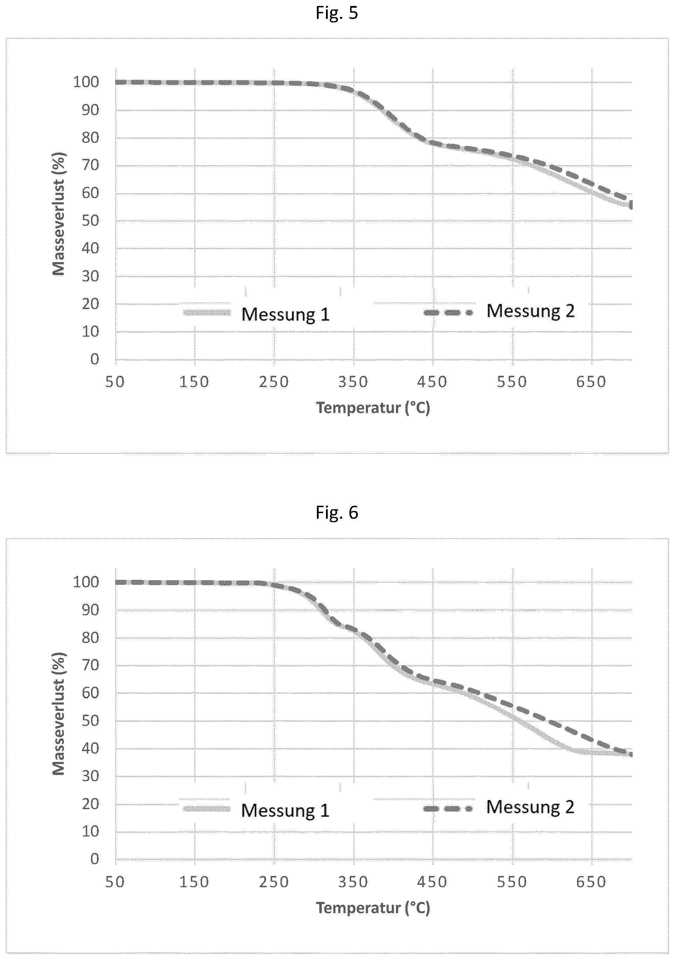

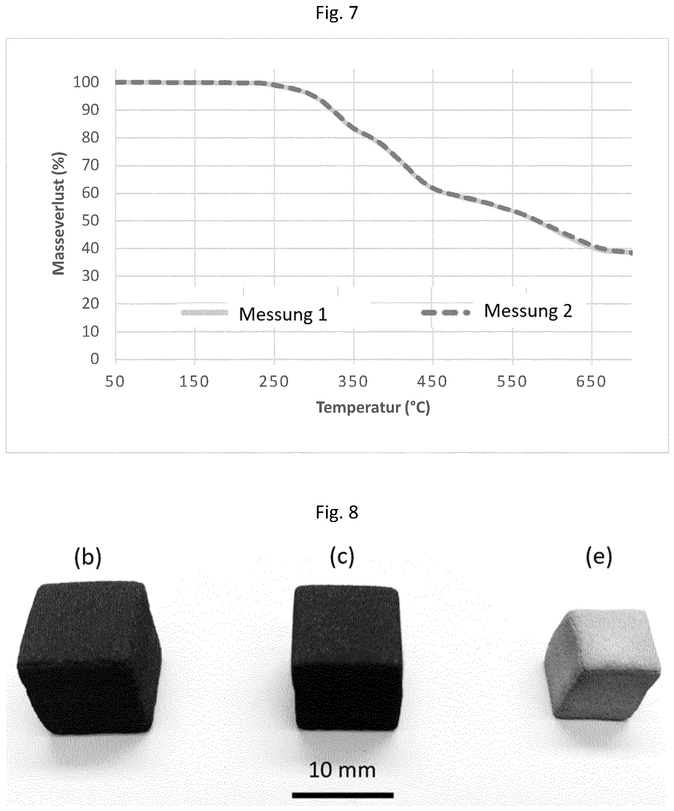

Die würfelförmigen, dreidimensionalen Objekte gemäß der Beispiele 1-3 wurden nach der Wärmehärtung in einem Ofen (Phoenix Microwave Muffle Furnace, CEM, Deutschland) mit 10 K/min auf eine Temperatur von 600 °C aufgeheizt, welche Temperatur dann für 10 h gehalten wurde, um die jeweilige Harzzusammensetzung zu zersetzen. Beim Aufheizen kam es zu einer allmählichen, kontinuierlichen Zersetzung der Harzzusammensetzung, was aus TGA-Kurven ersichtlich ist (Fig. 5 für Beispiel 1, Fig. 6 für Beispiel 2, Fig. 7 für Beispiel 3). Die TGA-Messungen wurden mit der TGA2 (Mettler Toledo, Deutschland) an synthetischer Luft durchgeführt, wobei eine Probe des dreidimensionalen Objekts (ca. 10 mg, entnommen aus einem gedruckten Zugstab) unter synthetischer Luft von 50 bis 700 °C mit 20 K/min aufgeheizt wurde. Der Onset der Zersetzung lag bei 330 °C (Beispiel 1, siehe Fig. 5). Im Falle der Ausgangsmaterialien gemäß der Beispiele 2 und 3, welche Aluminiumhydroxid als Sinterwerkstoff enthalten, kam es vor der Zersetzung der Harzzusammensetzung ab einer Temperatur von ungefähr 250 °C zu einer Dehydratisierung des Aluminiumhydroxids und zu einer Bildung von Aluminiumoxid, woraus ein zusätzlicher Gewichtsverlust resultierte (siehe Fig. 6 und 7). Dennoch minderte dies die Stabilität des dreidimensionalen Objekts nicht. Vielmehr kann durch die gehärtete Harzzusammensetzung eine gute Stabilität auch bei höheren Temperaturen erreicht werden, die erst mit fortschreitender Zersetzung der Harzzusammensetzung bei einem weiteren Aufheizen abnimmt. Der Masseverlust bei einer Temperatur von 700 °C lag bei ca. 45 Gew% (Beispiel 1), bei ca. 62 Gew% (Beispiel 2), bzw. bei ca. 61,6 Gew% (Beispiel 3).

### (VI) Wärmebehandlung des dreidimensionalen Objekts

Im Anschluss an die Zersetzung der Harzzusammensetzung wurden die dreidimensionalen Objekte wärmebehandelt. Dies erfolgte durch Sintern bei 1200 °C bzw. 1640 °C für 48 h bei Atmosphärendruck (ca. 1013 mbar) unter Luft in einem Muffelofen (Nabertherm P310, Nabertherm, Deutschland). In Tabelle 5 sind mittlere Schwindungen der gesinterten Objekte bezogen auf deren Ausgangsgröße angeführt. Weiters sind aus der Tabelle 5 die Dichte der dreidimensionalen Objekte sowie das Verhältnis von der tatsächlichen Dichte des jeweiligen Sinterwerkstoffs (Titandioxid; bzw. Aluminiumoxid, das durch Dehydratisierung von Aluminiumhydroxid bei erhöhter Temperatur gebildet wurde) ersichtlich. Die Schwindung des Objekts veranschaulicht auch Fig. 8, welche ein aus dem Ausgangsmaterial gemäß Beispiel 1 produziertes, würfelförmiges Objekt jeweils nach den Schritten (b), (c) und (e) zeigt.

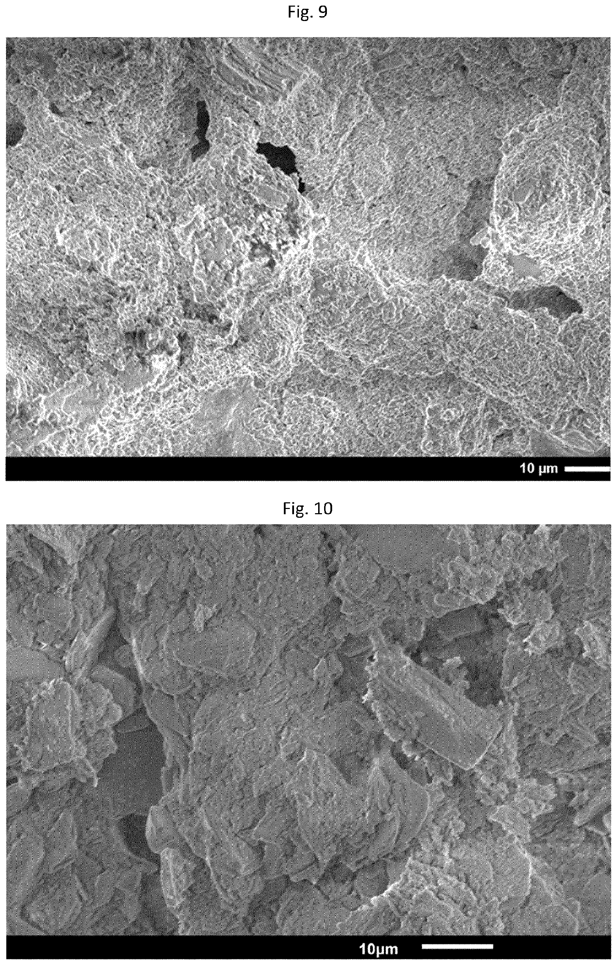

Die bei 1200 °C gesinterten dreidimensionalen Objekte wurden anschließend mit dem Rasterelektronenmikroskop JEO JSM-IT100 (Jeol, Japan), ausgestattet mit einem Sekundärelektronendetektor, untersucht. Die Rasterelektronenmikroskopie-Aufnahmen (REM-Aufnahmen) zeigen deutlich, dass sich beim Sintern ein homogenes Sintergefüge ausgebildet hat (Fig. 9 für Beispiel 1, Fig. 10 für Beispiel 2).

**Tabelle 5: Eigenschaften der dreidimensionalen Objekte nach der Wärmebehandlung bei verschiedenen Temperaturen**

| **Beispiel Nr.** | **Temperatur der Wärmebehandlung (°C)** | **Mittlere Schwindung bezogen auf Ausgangsgröße (%)** | **Dichte (g/cm³)** | **Tatsächliche Dichte bezogen auf die theoretische Dichte¹ (%)** |
|---|---|---|---|---|
| 1 | 1200 | 21 | 1,64 | 38,7 |
| 1 | 1640 | 32 | 3,16 | 74,5 |
| 2 | 1200 | 13 | 0,71 | 18,0 |
| 2 | 1640 | 39 | 2,02 | 51,3 |
| 3 | 1200 | -11² | 0,52 | 13,2 |
| 3 | 1640 | 32 | 1,72 | 43,9 |

| | | | | |
|---|---|---|---|---|
| ¹ die theoretische Dichte von Rutil liegt bei 4,24 g/cm³, die theoretische Dichte von Aluminiumoxid bei 3,94 g/cm³ ² Aufquellen und Ausbreitung in x- und y-Richtung bereits während Wärmehärtung | | | | |

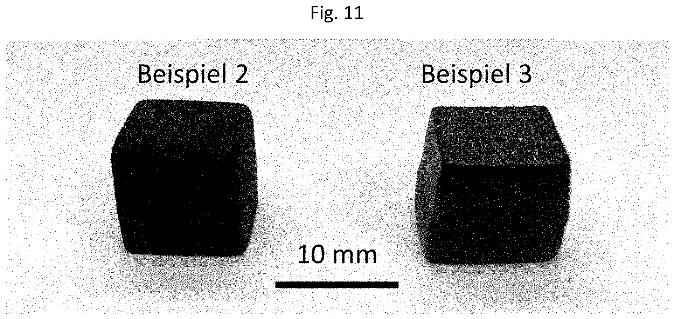

Wie aus Tabelle 5 ersichtlich, lassen sich durch die Nutzung von Aluminiumhydroxid als Sinterwerkstoff gezielt poröse dreidimensionale, keramische Objekte herstellen. Die offene Porosität liegt bei den Beispielen 2 und 3 bei 48,9 Vol% und 54,6 Vol%, im Vergleich zu ca. 22 Vol% bei Beispiel 1. Im Falle von Beispiel 3 kommt es bei der thermischen Behandlung der Objekte (Schritte (c), (d) und (e) des Verfahrens) zu einer Verformung dieser Objekte in die x- und y-Richtung. Eine solche Verformung kann durch die Anwendung eines entsprechend angepassten Ausgangsmaterials und/oder durch eine entsprechende Skalierung des zu druckenden Objekts reduziert bzw. verhindert werden. Den Einfluss des Ausgangsmaterials veranschaulicht Fig. 11, in der würfelförmige Objekte mit Ausgangszusammensetzungen gemäß der Beispiele 2 und 3 nach der additiven Fertigung (d.h. nach Schritt (b)) des Verfahrens gezeigt werden. Die Dimensionsstabilität des Objekts des Beispiels 2 ist vergleichsweise hoch.

## Patentansprüche

1. Verfahren zur Herstellung eines dreidimensionalen Objekts unter Verwendung von additiver Fertigung, insbesondere selektivem Lasersintern (L-PBF), umfassend die Schritte:
(a) Bereitstellen eines bei 25 °C festen Ausgangsmaterials umfassend eine wärmehärtbare Harzzusammensetzung und einen Sinterwerkstoff,
(b) Additive Fertigung des dreidimensionalen Objekts,
(c) zumindest teilweise Wärmehärtung der Harzzusammensetzung im dreidimensionalen Objekt,
(d) Zersetzung der Harzzusammensetzung im dreidimensionalen Objekt, und
(e) Wärmebehandlung des dreidimensionalen Objekts.

2. Verfahren nach Anspruch 1, **dadurch gekennzeichnet, dass** die additive Fertigung des dreidimensionalen Objekts in Schritt (b) unter zumindest teilweiser Wärmehärtung der Harzzusammensetzung erfolgt.

3. Verfahren nach Anspruch 1 oder 2, **dadurch gekennzeichnet, dass** die zumindest teilweise Wärmehärtung der Harzzusammensetzung in Schritt (c) unter schrittweiser Temperaturerhöhung erfolgt.

4. Verfahren nach einem der Ansprüche 1 bis 3, **dadurch gekennzeichnet, dass** der Sinterwerkstoff ein keramischer Vorläufer ist.

5. Verfahren nach Anspruch 4, **dadurch gekennzeichnet, dass** der Sinterwerkstoff ausgewählt ist aus der Gruppe umfassend Titandioxid, Zirkonoxid, Siliciumcarbid, Aluminiumhydroxid und Aluminiumoxid, oder eine Mischung davon.

6. Verfahren nach einem der Ansprüche 1 bis 5, **dadurch gekennzeichnet, dass** das Ausgangsmaterial ein Schwarzpigment umfasst.

7. Verfahren nach einem der Ansprüche 1 bis 6, **dadurch gekennzeichnet, dass** die wärmehärtbare Harzzusammensetzung ein Epoxidharz und einen Härter für das Epoxidharz umfasst, wobei der Härter vorzugsweise mindestens eine Amingruppe und/oder mindestens eine Amidgruppe enthält.

8. Verfahren nach einem der Ansprüche 1 bis 7, **dadurch gekennzeichnet, dass** die Harzzusammensetzung mindestens zwei wärmehärtbare Harze und einen Härter umfasst.

9. Verfahren nach einem der Ansprüche 1 bis 7, **dadurch gekennzeichnet, dass** die Harzzusammensetzung mindestens zwei wärmehärtbare Harze und mindestens zwei Härter umfasst.

10. Verfahren nach Anspruch 8 oder 9, **dadurch gekennzeichnet, dass** die mindestens zwei wärmehärtbaren Harze mindestens ein Epoxidharz und mindestens ein carboxyliertes Polyesterharz umfassen, und dass zumindest ein Härter vorzugsweise mindestens eine Amingruppe und/oder mindestens eine Amidgruppe enthält.

11. Verwendung eines bei 25 °C festen Ausgangsmaterials in der additiven Fertigung, insbesondere im selektiven Lasersintern (L-PBF), zur Herstellung eines dreidimensionalen Objekts, wobei das Ausgangsmaterial eine wärmehärtbare Harzzusammensetzung und einen Sinterwerkstoff umfasst, **dadurch gekennzeichnet, dass** das Ausgangsmaterial den Sinterwerkstoff in einer Menge von 20 Vol% oder mehr umfasst, bezogen auf das Gesamtvolumen des Ausgangsmaterials.

12. Verwendung nach Anspruch 11, **dadurch gekennzeichnet, dass** das Ausgangsmaterial den Sinterwerkstoff in einer Menge von 25 Vol% oder mehr umfasst, vorzugsweise 30 Vol% oder mehr, bevorzugter 35 Vol% oder mehr, besonders bevorzugt 40 Vol% oder mehr, bezogen auf das Gesamtvolumen des Ausgangsmaterials.

13. Verwendung nach Anspruch 11 oder 12, **dadurch gekennzeichnet, dass** der Sinterwerkstoff ausgewählt ist aus der Gruppe umfassend Titandioxid, Zirkonoxid, Siliciumcarbid, Aluminiumoxid, Aluminiumhydroxid und Mischungen davon.

14. Verwendung nach einem der Ansprüche 11 bis 13, **dadurch gekennzeichnet, dass** die Harzzusammensetzung mindestens zwei wärmehärtbare Harze und mindestens einen Härter umfasst.

15. Verwendung nach einem der Ansprüche 11 bis 14, **dadurch gekennzeichnet, dass** das Ausgangsmaterial ein Schwarzpigment umfasst.
